# EUROPEAN PATENT APPLICATION

(11) **EP 4 811 596 A1**
(43) Date of publication of application: **23.09.2026**
(21) Application number: 26161141.2
(22) Date of filing: 26.02.2026
(51) Int. Cl.: H02J 3/46, H02J 3/32, H02J 3/38, H02J 3/466

(54) **POWER CONTROL METHOD FOR POWER SYSTEM AND POWER SYSTEM**

(30) Priority: 20.03.2025 CN 202510335111
(71) Applicant: Shanghai Sigeyuan Intelligent Technology Co., Ltd., Shanghai 201306 (CN)
(72) Inventor: YU, Ziwei, Shanghai 201306 (CN); SUN, Jianwen, Shanghai 201306 (CN); QIN, Yijin, Shanghai 201306 (CN)
(74) Representative: Di Bernardo, Antonio

(57) **Abstract**

The present disclosure discloses a power control method for a power system and a power system, belonging to the field of power systems. The power control method for the power system includes: obtaining, by the first control module, an expected direct-current side power response value corresponding to a target power conversion device among the at least one power conversion device; determining, based on the expected direct-current side power response value corresponding to the target power conversion device, and an actual electric signal and a first electric signal reference value at the alternating-current coupling point, a target alternating-current electric signal corresponding to the target power conversion device; and controlling, based on the target alternating-current electric signal, an operating state of the target power conversion device, to adjust a power supply relationship between the at least one power conversion device. The power control method for the power system according to the present disclosure can enable each of the at least one power conversion device to reach a balanced state.

## Description

### FIELD

The present disclosure belongs to the field of power systems, and more particularly, relates to a power control method for a power system and a power system.

### BACKGROUND

With the development of renewable energy technologies, photovoltaic devices, energy storage devices, photovoltaic storage devices, and alternating-current/direct-current charging devices have been widely applied. However, as types and the number of controllable devices increase, degrees of freedom and constraints in system control accordingly increase, exponentially raising complexity of energy scheduling. In the related art, for off-grid operation scenarios, a conventional energy scheduling method typically involves enumerating various scenarios to determine a current operating state of each device, and then performing power allocation on this basis. This method needs to list all the scenarios, leading to low energy utilization, low control efficiency, high complexity, difficulty in covering various boundary conditions, and a lack of real-time capability, thereby undermining scheduling effectiveness and compromising accuracy and economy of the energy scheduling of the power system in the off-grid operation scenarios.

### SUMMARY

The present disclosure aims to solve at least one of the technical problems in the related art. To this end, the present disclosure proposes a method for controlling a power of a power system and a power system, so that each power conversion device reaches a balanced state.

In a first aspect, the present disclosure provides a power control method for a power system. The power system includes at least one power conversion device and a first control module electrically connected to each of the at least one power conversion device. Each of the at least one power conversion device is connected to an alternating-current coupling point. Each of the at least one power conversion device includes a first converter and at least one direct-current module. Each of the at least one power conversion device is configured to be connected to an external device via the alternating-current coupling point. In each of the at least one power conversion device, each of the least one direct-current module is connected to the first converter via a direct-current coupling point. The method includes: obtaining, by the first control module, an expected direct-current side power response value corresponding to a target power conversion device among the at least one power conversion device; determining, based on the expected direct-current side power response value corresponding to the target power conversion device, and an actual electric signal and a first electric signal reference value at the alternating-current coupling point, a target alternating-current electric signal corresponding to the target power conversion device; and controlling, based on the target alternating-current electric signal, an operating state of the target power conversion device, to adjust a power supply relationship between the at least one power conversion device.

In the power control method for the power system according to the present disclosure, the target alternating-current signal for adjusting the first converter of the power conversion device is determined based on the expected direct-current side power response value corresponding to the target power conversion device and the first electrical signal reference value at the alternating-current coupling point. The target alternating-current signal is then used to control the first converter, so as to adjust the power supply relationship between the at least one power conversion device and enable each power conversion device to reach a balanced state.

In a second aspect, the present disclosure provides a power control apparatus for a power system. The power system includes at least one power conversion device. Each of the at least one power conversion device is connected to an alternating-current coupling point. Each of the at least one power conversion device includes a first converter and at least one direct-current module. Each of the at least one power conversion device is configured to be connected to an external device via the alternating-current coupling point. In each of the at least one power conversion device, each of the least one direct-current module is connected to the first converter via a direct-current coupling point. The apparatus includes a first processing module, a second processing module, and a third processing module. The first processing module is configured to obtain an expected direct-current side power response value corresponding to a target power conversion device among the at least one power conversion device. The second processing module is configured to determine, based on the expected direct-current side power response value corresponding to the target power conversion device, and an actual electric signal and a first electric signal reference value at the alternating-current coupling point, a target alternating-current electric signal corresponding to the target power conversion device. The third processing module is configured to control, based on the target alternating-current electric signal, an operating state of the target power conversion device, to adjust a power supply relationship between the at least one power conversion device.

In the power control apparatus for the power system according to the present disclosure, the target alternating-current signal for adjusting the first converter of the power conversion device is determined based on the expected direct-current side power response value corresponding to the target power conversion device and the first electrical signal reference value at the alternating-current coupling point. The target alternating-current signal is then used to control the first converter, so as to adjust the power supply relationship between the at least one power conversion device and enable each power conversion devices to reach a balanced state.

In a third aspect, the present disclosure provides a power system. The power system includes a first control module and at least one power conversion device. Each of the at least one power conversion device is connected to an alternating-current coupling point. Each of the at least one power conversion device includes a first converter and at least one direct-current module. Each of the at least one power conversion device is configured to be connected to an external device via the alternating-current coupling point. In each of the at least one power conversion device, each of the at least one direct-current module is connected to the first converter via a direct-current coupling point. The first control module is connected to the first converter of the at least one power conversion device. The power system operates based on the power control method for the power system according to the first aspect.

In a fourth aspect, the present disclosure provides a non-transitory computer-readable storage medium. The medium has a computer program stored thereon. The computer program is configured to implement, when executed by a processor, the power control method for the power system according to the first aspect above.

In a fifth aspect, the present disclosure provides a computer program product. The product includes a computer program configured to implement, when executed by a processor, the power control method for the power system according to the first aspect above.

### BRIEF DESCRIPTION OF THE DRAWINGS

These and other aspects and advantages of embodiments of the present disclosure will become apparent and more readily appreciated from the following descriptions made with reference to the accompanying drawings.
FIG. 1 is a first schematic flowchart of a power control method for a power system according to an embodiment of the present disclosure.
FIG. 2 is a first schematic structural diagram of a power system according to an embodiment of the present disclosure.
FIG. 3 is a second schematic structural diagram of a power system according to an embodiment of the present disclosure.
FIG. 4 is a third schematic structural diagram of a power system according to an embodiment of the present disclosure.
FIG. 5 is a second schematic flowchart of a power control method for a power system according to an embodiment of the present disclosure.
FIG. 6 is a third schematic flowchart of a power control method for a power system according to an embodiment of the present disclosure.
FIG. 7 is a fourth schematic flowchart of a power control method for a power system according to an embodiment of the present disclosure.
FIG. 8 is a fourth schematic structural diagram of a power system according to an embodiment of the present disclosure.
FIG. 9 is a first schematic illustration of results of a power control method for the power system according to an embodiment of the present disclosure.
FIG. 10 is a second schematic illustration of results of a power control method for a power system according to an embodiment of the present disclosure.
FIG. 11 is a third schematic illustration of results of a power control method for a power system according to an embodiment of the present disclosure.
FIG. 12 is a fourth schematic illustration of results of a power control method for a power system according to an embodiment of the present disclosure.
FIG. 13 is a fifth schematic illustration of results of a power control method for a power system according to an embodiment of the present disclosure.
FIG. 14 is a sixth schematic illustration of results of a power control method for a power system according to an embodiment of the present disclosure.
FIG. 15 is a seventh schematic illustration of results of a power control method for a power system according to an embodiment of the present disclosure.
FIG. 16 is an eighth schematic illustration of results of a power control method for a power system according to an embodiment of the present disclosure.
FIG. 17 is a ninth schematic illustration of results of a power control method for a power system according to an embodiment of the present disclosure.
FIG. 18 is a tenth schematic illustration of results of a power control method for a power system according to an embodiment of the present disclosure.
FIG. 19 is an eleventh schematic illustration of results of a power control method for a power system according to an embodiment of the present disclosure.
FIG. 20 is a twelfth schematic illustration of results of a power control method for a power system according to an embodiment of the present disclosure.
FIG. 21 is a thirteenth schematic illustration of results of a power control method for a power system according to an embodiment of the present disclosure.
FIG. 22 is a schematic structural diagram of a power control apparatus for a power system according to an embodiment of the present disclosure.
FIG. 23 is a schematic structural diagram of an electronic device according to an embodiment of the present disclosure.

### DETAILED DESCRIPTION OF THE EMBODIMENTS

Technical solutions according to embodiments of the present disclosure will be described clearly below in combination with accompanying drawings of the embodiments of the present disclosure. Obviously, the embodiments described below are a part of the embodiments of the present disclosure, rather than all embodiments of the present disclosure. On a basis of the embodiments of the present disclosure, all other embodiments obtained by those skilled in the art shall fall within the scope of the present disclosure.

Terms such as "first" and "second" in the specification and claims of the present disclosure are used only to distinguish between similar objects, rather than to describe a particular order or sequence. It should be understood that the data as used can be interchanged where appropriate, to enable the embodiments of the present disclosure described herein to be implemented in an order other than that illustrated or described herein. Also, the objects distinguished by the terms such as "first" and "second" are usually objects of the same type. The quantity of objects is not limited. For example, a first object may be one first object or a plurality of first objects. In addition, "and/or" throughout the specification and claims indicates at least one of the objects associated with "and/or". The character "/" generally indicates that the associated objects before and after the character are in an "or" relationship.

A power control method for a power system, a power control apparatus for a power system, an electronic device, and a readable storage medium according to the embodiments of the present disclosure will be described below in detail with reference to specific embodiments and application scenarios thereof in combination with the accompanying drawings.

The power control method for the power system may be applied in a terminal, and may be specifically executed by hardware or software in the terminal.

In the following various embodiments, a terminal including a display and a touch-sensitive surface is described. However, it should be understood that the terminal may include one or more other physical user interface devices such as a physical keyboard, mouse and joystick.

In the power control method for the power system according to the embodiments of the present disclosure, an execution subject of the power control method for the power system may be an electronic device or a functional module or a functional entity in the electronic device that is capable of implementing the power control method for the power system. The electronic device mentioned in the embodiments of the present disclosure includes but is not limited to a mobile phone, a tablet computer, a computer, a camera, and a wearable device. The power control method for the power system according to the embodiments of the present disclosure will be described below by taking the electronic device serving as the execution subject as an example.

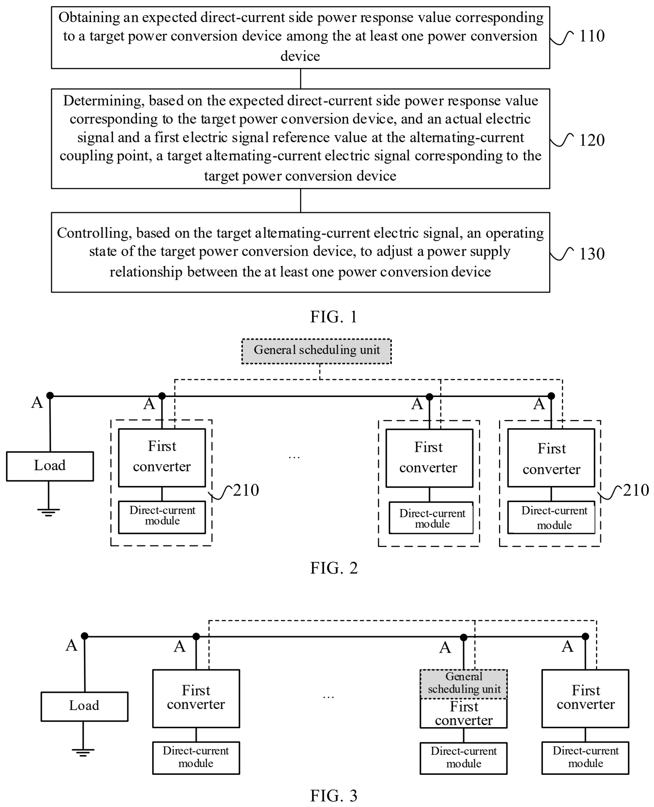

As shown in FIG. 1, the power control method for the power system includes actions at steps 110, 120, and 130.

The power control method for the power system may be applied in off-grid operation scenarios.

At step 110, an expected direct-current side power response value corresponding to a target power conversion device among at least one power conversion device is obtained.

In this step, the power system includes the at least one power conversion device, and each of the at least one power conversion device is connected to an alternating-current coupling point, as shown by point A in FIG. 2.

Each of the at least one power conversion device includes a first converter and at least one direct-current module. The first converter is connected to each of the at least one direct-current module. Each of the at least one power conversion device is configured to be connected to an external device via the alternating-current coupling point.

The external device may be a power consumption device, such as an electrical load. Alternatively, the external device may be a third-party power generation device, such as a third-party inverter or a power generation load.

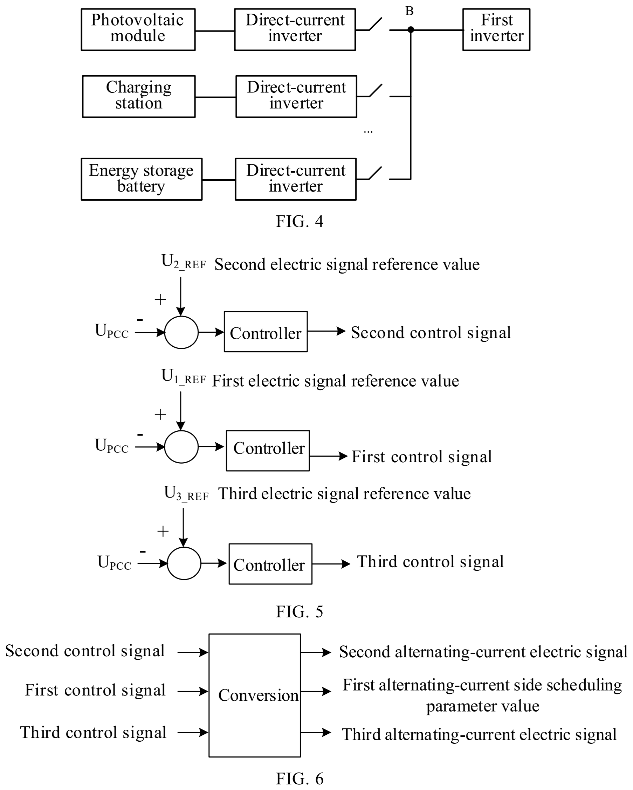

As shown in FIG. 4, in each of the at least one power conversion device, each of the at least one direct-current module is connected to the first converter via a direct-current coupling point B.

In some embodiments, each of the at least one direct-current module may include a direct-current converter and a power generation device, a power consumption device, or an energy storage device connected to the direct-current converter. The power generation device may be, for example, a photovoltaic device, a wind power generation device, or other new energy power generation devices. The power consumption device may be, for example, a charging station. The energy storage device may be, for example, an energy storage battery.

Depending on the types of the devices connected to the direct-current converter, the direct-current modules also have a plurality of types correspondingly. The direct-current modules may be categorized into the following types: a power generation device, a power consumption device, or an energy storage device, etc.

The types of the different power conversion devices may also vary based on the types of the direct-current modules included in them. It can be understood that the power conversion device may be a pure energy storage module, a pure photovoltaic module, a photovoltaic-energy storage module, a photovoltaic-energy storage-charging module, or other combination modules. Specific configurations can be set according to actual needs and are not limited herein. For example, when the power conversion device includes the first converter and one or more photovoltaic devices, the power conversion device is the pure photovoltaic module; when the power conversion device includes the first converter and one or more energy storage devices, the power conversion device is the pure energy storage module; and when the power conversion device includes the first converter, a photovoltaic device, and an energy storage device, the power conversion device may be the photovoltaic-energy storage module.

The target power conversion device may be any device among all the power conversion devices of the power system.

The expected direct-current side power response value corresponding to the target power conversion device refers to an expected response power corresponding to the target power conversion device at the direct-current coupling point. Hereinafter, Px_dc represents an expected direct-current side power response value of an x-th power conversion device, where x is a positive integer. It can be understood that expected direct-current side power response values corresponding to different power conversion devices may be the same or different, and expected direct-current side power response values of one power conversion device at different time points may also vary.

The expected direct-current side power response value corresponding to the target power conversion device may be expressed as a sum of the expected sub-direct-current side power response value corresponding to the at least one direct-current module of the target power conversion device.

In some embodiments, an action at step 110 may include: for each of of the at least one direct-current module of the target power conversion device, determining, based on a type of the direct-current module of the target power conversion device, an expected sub-direct-current side power response value corresponding to the direct-current module; and determining, based on a sum of the expected sub-direct-current side power responses value corresponding to the at least one direct-current module, the expected direct-current side power response value corresponding to the target power conversion device.

In this embodiment, the at least one direct-current module may be categorized into the following types: an energy storage device, a power generation device, a power consumption device, etc.

One power conversion device may include one or more direct-current modules. When one power conversion device includes more than one direct-current modules, the plurality of direct-current modules included may be of one type, such as the pure energy storage module or a pure power generation device. The plurality of direct-current modules included may also be of different types, such as a combination of an energy storage device and a power generation device, a combination of an energy storage device and a power consumption device, a combination of a power generation device and a power consumption device, and a combination of an energy storage device, a power generation device, and a power consumption device.

When calculating the expected direct-current side power response value corresponding to the target power conversion device, the expected sub-direct-current side power response values corresponding to the direct-current modules of the target power conversion device should be calculated first, and the expected sub-direct-current side power response values should be then summed. It should be noted that the expected sub-direct-current side power response value and the expected direct-current side power response value are both vectors, including magnitude and direction. A discharging direction is defined as positive, while a charge direction is defined as negative.

For the direct-current modules of the different types, methods for determining their respective expected sub-direct-current side power response values differ.

In some embodiments, for each of the at least one direct-current module, the expected sub-direct-current side power response value corresponding to the direct-current module can be determined based on at least one of the type of the direct-current module, a performance parameter of the direct-current module, power scheduling of the direct-current module, and a charging request power corresponding to the direct-current module.

In this embodiment, the type of each of the at least one direct-current module can be determined first, and a corresponding calculation method can be then selected based on the type. In some embodiments, when calculating the expected sub-direct-current side power response value, a first alternating-current side scheduling parameter value must also be comprehensively considered. The first alternating-current side scheduling parameter value is determined based on the actual electrical signal and the first electrical signal reference value at the alternating-current coupling point. The specific determination method will be described in the following embodiments, and details thereof are omitted herein.

In some embodiments, for each of the at least one direct-current module of the target power conversion device, determining, based on the type of the direct-current module, the expected sub-direct-current side power response value corresponding to the direct-current module includes:
when the direct-current module is a power generation device, determining a maximum generation power corresponding to the power generation device as an expected sub-direct-current side power response value corresponding to the power generation device;
when the direct-current module is a power consumption device, determining a charging request power corresponding to the power consumption device as the expected sub-direct-current side power response value corresponding to the power consumption device; and
when the direct-current module is an energy storage device, determining, based on types of other direct-current modules connected to the energy storage device and a first alternating-current side scheduling parameter value, an expected sub-direct-current side power response value corresponding to the energy storage device. The first alternating-current side scheduling parameter value is determined based on the actual electrical signal and the first electrical signal reference value at the alternating-current coupling point.

In this embodiment, when the direct-current module is the power generation device, the expected sub-direct-current side power response value is an expected maximum output power, i.e., a maximum generating power, which is a positive value. Taking a photovoltaic module as an example, the expected sub-direct-current side power response value may be an expected maximum photovoltaic power.

When the direct-current module is the power consumption device, such as a charging station, the expected sub-direct-current side power response value may be a charging request power of a power consumption device connected to the charging station, and the charging request power is a negative value.

When the direct-current module is the energy storage device, the expected sub-direct-current side power response value may be an expected energy storage scheduling response power within an allowable range of the performance parameters and under a balanced distribution, which can be specifically determined based on types of other direct-current modules connected to the energy storage device and the first alternating-current side scheduling parameter value.

In some embodiments, when the direct-current module is the energy storage device, determining, based on the types of other direct-current modules connected to the energy storage device and the first alternating-current side scheduling parameter value, the expected sub-direct-current side power response value corresponding to the energy storage device can include:
when each of the other direct-current modules connected to the energy storage device is the energy storage device or no other devices connected to the energy storage device exist, determining the expected sub-direct-current side power response value corresponding to the energy storage device based on an absolute value of a maximum charge and discharge power that corresponds to the energy storage device, an absolute value of the first alternating-current side scheduling parameter value, and the charge and discharge state corresponding to the maximum charge and discharge power;
when the other direct-current modules connected to the energy storage device comprise at least one of the power generation device and the power consumption device, determining, based on the first alternating-current side scheduling parameter value and an expected sub-direct-current side power response value corresponding to a target module, an energy storage scheduling power corresponding to the energy storage device, wherein the target module comprises the power generation device and/or the power consumption device connected to the energy storage device; and
determining the expected sub-direct-current side power response value corresponding to the energy storage device based on the energy storage scheduling power corresponding to the energy storage device, a charge and discharge state corresponding to the energy storage scheduling power, and the maximum charge and discharge power corresponding to the energy storage device.

In this embodiment, the target module comprises a power generation device and/or a power consumption device connected to the energy storage device. An expected sub-direct-current side power response value corresponding to the power generation device is a maximum generating power, and an expected sub-direct-current side power response value corresponding to the power consumption device is a charging request power.

When the target power conversion device is the pure-energy storage device, the expected sub-direct-current side power response value corresponding to the energy storage device can be determined based on the absolute value of the maximum charge and discharge power corresponding to the energy storage device, the absolute value of the first alternating-current side scheduling parameter value, and the charge and discharge state corresponding to the maximum charge and discharge power.

If the absolute value of the maximum charge and discharge power is smaller than the absolute value of the first alternating-current side scheduling parameter value, the expected sub-direct-current side power response value should be determined as the maximum charge and discharge power. If the absolute value of the maximum charge and discharge power is greater than the absolute value of the first alternating-current side scheduling parameter value, the expected sub-direct-current side power response value should be determined as the first alternating-current side scheduling parameter value.

When the target power device is the hybrid module integrating the energy storage device with devices of other types, it should be comprehensively determined in combination with the first alternating-current side scheduling parameter value.

It can be understood that for the hybrid module including the energy storage device, the energy storage scheduling power = the first alternating-current side scheduling parameter value + the expected sub-direct-current side power response value corresponding to the target module. The expected sub-direct-current side power response value corresponding to the target module may be positive or negative.

After obtaining the energy storage scheduling power, the expected sub-direct-current side power response value corresponding to the energy storage device is determined based on a comprision of the absolute value of the energy storage scheduling power and the absolute value of the maximum charge and discharge power. If the absolute value of the maximum charge and discharge power is smaller than the absolute value of the energy storage scheduling power, the expected sub-direct-current side power response value shall be determined as the maximum charge and discharge power. If the absolute value of the maximum charge and discharge power is greater than the absolute value of the energy storage scheduling power, the expected sub-direct-current side power response value shall be determined as the energy storage scheduling power.

The maximum charge and discharge power includes a maximum charging power and a maximum discharging power. The maximum charging power is negative, and the maximum discharging power is positive.

The maximum discharging power of the energy storage device represents a maximum discharging power comprehensively obtained based on a current energy storage device operating within an allowable range of performance parameters and under a balanced distribution. The maximum charging power of the energy storage device represents a maximum charging power comprehensively obtained based on a current energy storage device operating within an allowable range of performance parameters and under a balanced distribution.

After obtaining the expected sub-direct-current side power response value corresponding to the energy storage device, the expected sub-direct-current side power response value is summed with an expected sub-direct-current side power response value corresponding to the other target module to obtain the expected direct-current side power response value corresponding to the target power conversion device.

A specific method for determining an expected direct-current side power response value at a direct-current coupling point of a certain power conversion device is described below.
1. If the power conversion device is a pure-energy storage device:
   The expected direct-current side power response value at the direct-current coupling point is a current capability of the energy storage device to respond to the first alternating-current side scheduling parameter value.
   1) If the first alternating-current side scheduling parameter value is in a discharging direction:
      when an absolute value of the maximum discharging power of the energy storage device is smaller than the absolute value of the first alternating-current side scheduling parameter value, the expected direct-current side power response value at the direct-current coupling point is equal to the maximum discharging power; and
      when the absolute value of the maximum discharging power of the energy storage device is greater than the absolute value of the first alternating-current side scheduling parameter value, the expected direct-current side power response value at the direct-current coupling point is equal to the first alternating-current side scheduling parameter value.
   2) If the first alternating-current side scheduling parameter value is in a charging direction:
      when an absolute value of the maximum charging power of the energy storage device is smaller than the absolute value of the first alternating-current side scheduling parameter value, the expected direct-current side power response value at the direct-current coupling point is equal to the maximum charging power; and
      when the absolute value of the maximum charging power of the energy storage device is greater than the absolute value of the first alternating-current side scheduling parameter value, the expected direct-current side power response value at the direct-current coupling point is equal to the first alternating-current side scheduling parameter value.
2. If the power conversion device is a pure photovoltaic device:
   The expected direct-current side power response value at the direct-current coupling point is a maximum output power of the power generation device in a current state.
3. If the power conversion device is a photovoltaic-energy storage device:
   The expected direct-current side power response value at the direct-current coupling point is a current maximum available output power of the power generation device. The expected sub-direct-current side power response value corresponding to the power generation device is a maximum generating power. The energy storage scheduling power = the first alternating-current side scheduling parameter value - an absolute value of the maximum generating power.
   1) If the energy storage scheduling power is in a discharging direction:
      a) when an absolute value of the maximum discharging power of the energy storage device is smaller than the absolute value of the energy storage scheduling power, the expected sub-direct-current side power response value corresponding to the energy storage device is equal to the maximum discharging power, and the expected direct-current side power response value = the expected sub-direct-current side power response value corresponding to the power generation device + the expected sub-direct-current side power response value corresponding to the energy storage device = the absolute value of the maximum generating power + the absolute value of the maximum discharging power of the energy storage device; and
      b) when the absolute value of the maximum discharging power of the energy storage device is greater than the absolute value of the energy storage scheduling power, the expected sub-direct-current side power response value corresponding to the energy storage device is equal to the energy storage scheduling power, and the expected direct-current side power response value = the expected sub-direct-current side power response value corresponding to the power generation device + the expected sub-direct-current side power response value corresponding to the energy storage device = the absolute value of the maximum generating power + the first alternating-current side scheduling parameter value - the absolute value of the maximum generating power = the first alternating-current side scheduling parameter value.
   2) If the energy storage scheduling power is in a charging direction:
      a) when an absolute value of the maximum charging power of the energy storage device is smaller than the absolute value of the energy storage scheduling power, the expected direct-current side power response value corresponding to the energy storage device is equal to the maximum charging power, and the expected direct-current side power response value = the expected sub-direct-current side power response value corresponding to the power generation device + the expected sub-direct-current side power response value corresponding to the energy storage device = the absolute value of the maximum generating power - the absolute value of the maximum charging power of the energy storage device; and
      b) when the absolute value of the maximum charging power of the energy storage device is greater than the absolute value of the energy storage scheduling power, the expected sub-direct-current side power response value corresponding to the energy storage device is equal to the energy storage scheduling power, and the expected direct-current side power response value = the expected sub-direct-current side power response value corresponding to the power generation device + the expected sub-direct-current side power response value corresponding to the energy storage device = the absolute value of the maximum power generation + the first alternating-current side scheduling parameter value - the absolute value of the maximum generating power = the first alternating-current side scheduling parameter value.
4. If the power conversion device is a combination of a pure-energy storage device and the power consumption device:
   The expected direct-current side power response value at the direct-current coupling point is a current capacity of the energy storage device to respond to the first alternating-current side scheduling parameter value and the power consumption device. An expected direct-current side power response value corresponding to the power consumption device is the charging request power. The energy storage scheduling power = the first alternating-current side scheduling parameter value + an absolute value of the charging request power.
   1) If the energy storage scheduling power is in a discharging direction:
      a) when an absolute value of the maximum discharging power of the energy storage device is smaller than the absolute value of the energy storage scheduling power, the expected sub-direct-current side power response value corresponding to the energy storage device = the maximum discharging power, and the expected direct-current side power response value = the expected sub-direct-current side power response value corresponding to the power consumption device + the expected sub-direct-current side power response value corresponding to the energy storage device = the negative of the absolute value of the charging request power + the absolute value of the maximum discharging power of the energy storage device; and
      b) when the absolute value of the maximum discharging power of the energy storage device is greater than the absolute value of the energy storage scheduling power, the expected sub-direct-current side power response value corresponding to the energy storage device = the energy storage scheduling power, and the expected direct-current side power response value = the expected sub-direct-current side power response value corresponding to the power consumption device + the expected sub-direct-current side power response value corresponding to the energy storage device = the negative of the absolute value of the charging request power + the first alternating-current side scheduling parameter value + the absolute value of the charging request power = the first alternating-current side scheduling parameter value.
   2) If the energy storage scheduling power is in a charging direction:
      a) when an absolute value of the maximum charging power of the energy storage device is smaller than the absolute value of the energy storage scheduling power, the expected direct-current side power response value corresponding to the energy storage device is equal to the maximum charging power, and the expected direct-current side power response value = the expected sub-direct-current side power response value corresponding to the power consumption device + the expected sub-direct-current side power response value corresponding to the energy storage device = the negative of the absolute value of the charging request power - the absolute value of the maximum charging power of the energy storage device.
      b) when the absolute value of the maximum charging power of the energy storage device is greater than the absolute value of the energy storage scheduling power, the expected sub-direct-current side power response value corresponding to the energy storage device = the energy storage scheduling power, and the expected direct-current side power response value = the expected sub-direct-current side power response value corresponding to the power consumption device + the expected sub-direct-current side power response value corresponding to the energy storage device = the negative of the absolute value of the charging request power + the first alternating-current side scheduling parameter value + the absolute value of the charging request power = the first alternating-current side scheduling parameter value.
5. If the power conversion device is a combination of a photovoltaic-energy storage device and the power consumption device:
   The expected direct-current side power response value at the direct-current coupling point is a capability of a maximum available output power of the power generation device in a current state together with the energy storage device to respond to the first alternating-current side scheduling parameter value and the charging of the power consumption device.

The expected sub-direct-current side power response value corresponding to the power generation device is the maximum generating power.

The expected direct-current side power response value corresponding to the power consumption device is the charging request power.

The energy storage scheduling power = the first alternating-current side scheduling parameter value + an absolute value of the charging request power - an absolute value of the maximum generating power.
1) If the energy storage scheduling power is in a discharging direction:
   a) when an absolute value of the maximum discharging power of the energy storage device is smaller than the absolute value of the energy storage scheduling power, the expected sub-direct-current side power response value corresponding to the energy storage device is equal to the maximum discharging power, and the expected direct-current side power response value = the expected sub-direct-current side power response value corresponding to the power generation device + the expected sub-direct-current side power response value corresponding to the power consumption device + the expected sub-direct-current side power response value corresponding to the energy storage device = an absolute value of the maximum generating power - an absolute value of the charging request power + the absolute value of the maximum discharging power of the energy storage device; and
   b) when the absolute value of the maximum discharging power of the energy storage device is greater than the absolute value of the energy storage scheduling power, the expected sub-direct-current side power response value corresponding to the energy storage device is equal to the energy storage scheduling power, and the expected direct-current side power response value = the expected sub-direct-current side power response value corresponding to the power generation device + the expected sub-direct-current side power response value corresponding to the power consumption device + the expected sub-direct-current side power response value corresponding to the energy storage device = the absolute value of the maximum generating power - the absolute value of the charging request power + the first alternating-current side scheduling parameter value + the absolute value of the charging request power - the absolute value of the maximum generating power = the first alternating-current side scheduling parameter value.
2) If the energy storage scheduling power is in a charging direction:
   a) when a maximum charging power of the energy storage device is smaller than the energy storage scheduling power, the expected sub-direct-current side power response value corresponding to the energy storage device is equal to the maximum charging power, and the expected direct-current side power response value = the expected sub-direct-current side power response value corresponding to the power generation device + the expected sub-direct-current side power response value corresponding to the power consumption device + the expected sub-direct-current side power response value corresponding to the energy storage device = an absolute value of the maximum generating power - an absolute value of the charging request power - the absolute value of the maximum charging power of the energy storage device; and
   b) when the maximum charging power of the energy storage device is greater than the energy storage scheduling power, the expected sub-direct-current side power response value corresponding to the energy storage device is equal to the energy storage scheduling power, and the expected direct-current side power response value = the expected sub-direct-current side power response value corresponding to the power generation device + the expected sub-direct-current side power response value corresponding to the power consumption device + the expected sub-direct-current side power response value corresponding to the energy storage device = the absolute value of the maximum generating power - the absolute value of the charging request power + the first alternating-current side scheduling parameter value + the absolute value of the charging request power - the absolute value of the maximum generating power = the first alternating-current side scheduling parameter value.

6. If the power conversion device is a combination of the power generation device and the power consumption device, the expected direct-current side power response value at the direct-current coupling point is a capability of a maximum available output power of the power generation device in a current state to respond to the first alternating-current side scheduling parameter value and the charging of the power consumption device.

The expected sub-direct-current side power response value corresponding to the power generation device is the maximum generating power.

The expected sub-direct-current side power response value corresponding to the power consumption device is the charging request power.

The expected direct-current side power response value = the expected sub-direct-current side power response value corresponding to the power generation device + the expected sub-direct-current side power response value corresponding to the power consumption device = an absolute value of the maximum generating power - an absolute value of the charging request power.

It can be understood that for each power conversion device, the expected direct-current side power response value at the corresponding direct-current coupling point is comprehensively determined based on the expected sub-direct-current side power response value of each direct-current module and the first alternating-current side scheduling parameter value under a current operating state of the power conversion device. In the actual execution process, it can be calculated by the first converter corresponding to the power conversion device.

At step 120, a target alternating-current electric signal corresponding to the target power conversion device is determined based on the expected direct-current side power response value corresponding to the target power conversion device, and an actual electric signal and a first electric signal reference value at the alternating-current coupling point.

In this step, the first electrical signal reference value is configured to characterize a rated voltage or a voltage range within a certain range (such as ±10% or ±20%) above and below the rated voltage, and to characterize a voltage range in which the external device (such as a load) connected to the power system can operate normally. The specific value can be set in a corresponding manner based on user customization or the connected external device, which is not limited in the present disclosure.

In some embodiments, the first electrical signal reference value may be determined based on a rated voltage of a power grid in an area where the power system is located, and is configured to enable a load connected to the power system to operate normally.

For example, when the rated voltage of the power grid is 220V, the first electrical signal reference value may be set to 220V or 220V±2V, etc.

The actual electrical signal may include amplitude, an Root Mean Square, or a frequency of the actual voltage at the alternating-current coupling point.

When the actual electrical signal is amplitude or a Root Mean Square (RMS) value of a voltage, the first electrical signal reference value, a second electrical signal reference value, and a third electrical signal reference value at the alternating-current coupling point may be respectively set to reference values corresponding to the amplitude or the RMS value of the voltage. When the actual electrical signal is a frequency of the voltage, the first electrical signal reference value, the second electrical signal reference value, and the third electrical signal reference value at the alternating-current coupling point may be respectively set to reference values corresponding to the frequency of the voltage.

The actual electrical signal is the amplitude, the RMS value, or the frequency, etc., of the voltage, and their corresponding control logic is similar. The amplitude of the voltage is taken as an example for illustration below.

For ease of description, hereinafter, Upcc represents the actual electrical signal at the alternating-current coupling point, U1_ref represents the first electrical signal reference value at the alternating-current coupling point, Px_dc represents an expected direct-current side power response value of an x-th power conversion device, and Px_ac_1 represents a first alternating-current side scheduling parameter value of the x-th power conversion device.

In some embodiments, the action at step 120 may include:
determining, based on the actual electrical signal and the first electrical signal reference value at the alternating-current coupling point, a first alternating-current side scheduling parameter value; and
determining, based on the first alternating-current side scheduling parameter value and the expected direct-current side power response value corresponding to the target power conversion device, the target alternating-current electric signal corresponding to the target power conversion device.

In this embodiment, as shown in FIG. 5, the first alternating-current side scheduling parameter value for enabling the actual electrical signal at the alternating-current coupling point to track the first electrical signal reference value can be obtained by subtracting the first electrical signal reference value from the actual electrical signal at the alternating-current coupling point and performing Proportional-Integral (PI) control based on the difference.

It can be understood that for a standalone system, the first alternating-current side scheduling parameter value corresponding to the alternating-current coupling point is the first alternating-current side scheduling parameter value corresponding to the power conversion device. For a multi-device parallel system, each power conversion device can still be treated as an independent entity. A first control signal can be determined based on the actual electrical signal and the first electrical signal reference value at the alternating-current coupling point, and the first alternating-current side scheduling parameter value corresponding to the target power conversion device is determined based on the first control signal and a first converter parameter corresponding to the target power conversion device.

Then, the target alternating-current electric signal is determined based on the magnitude relationship between the first alternating-current side scheduling parameter value and the expected direct-current side power response value that correspond to the target power conversion device.

In some embodiments, the determining, based on the first alternating-current side scheduling parameter value and the expected direct-current side power response value corresponding to the target power conversion device, the target alternating-current electric signal corresponding to the target power conversion device includes:
when an absolute value of a difference between the first alternating-current side scheduling parameter value and the expected direct-current side power response value is smaller than a first threshold, determining the target alternating-current electric signal as the first alternating-current side scheduling parameter value; and
when the absolute value of the difference between the first alternating-current side scheduling parameter value and the expected direct-current side power response value is greater than or equal to a first threshold, determining the target alternating-current electric signal as the expected direct-current side power response value.

In this embodiment, the absolute value of the difference between the first alternating-current side scheduling parameter value and the expected direct-current side power response value may be expressed as an absolute value of a difference or a ratio. The first threshold is a smaller value, such as 0 or a positive number close to 0.

When the absolute value of the difference between the first alternating-current side scheduling parameter value and the expected direct-current side power response value is smaller than the first threshold, it can be approximately considered that the first alternating-current side scheduling parameter value is equal to the expected direct-current side power response value. When the absolute value of the difference between the first alternating-current side scheduling parameter value and the expected direct-current side power response value is greater than or equal to the first threshold, it is considered that the first alternating-current side scheduling parameter value is smaller than or greater than the expected direct-current side power response value.

When the first alternating-current side scheduling parameter value is approximately equal to the expected direct-current side power response value, the target power conversion device should be controlled to continuously operate based on the first alternating-current side scheduling parameter value.

When the first alternating-current side scheduling parameter value is smaller than or greater than the expected direct-current side power response value, the target power conversion device should be controlled to operate based on the expected direct-current side power response value.

The specific method for determining the expected direct-current side power response value has been described in the above embodiments, and details thereof are omitted herein.

In the present disclosure, each power conversion device in a standalone scenario or a parallel-operated scenario can be independently controlled based on the above-mentioned control method. In the parallel-operated scenario, each of the power conversion devices operate based on its own determined target alternating-current electric signal, thereby achieving overall balanced control.

In the power control method for the power system according to the embodiments of the present disclosure, the target alternating-current signal for adjusting the first converter of the power conversion device is determined based on the expected direct-current side power response value corresponding to the target power conversion device and the first electrical signal reference value at the alternating-current coupling point. The target alternating-current signal is then used to control the first converter, so as to adjust the power supply relationship between the at least one power conversion device and enable each power conversion device to reach a balanced state.

At step 130, an operating state of the target power conversion device is controlled based on the target alternating-current electric signal, to adjust a power supply relationship between the at least one power conversion device.

In this step, the operating state includes a charge and discharge state, a charge and discharge power, etc. The charge and discharge state includes a charging state or a discharging state.

It should be noted that for each power conversion device, the corresponding target alternating-current electric signal can be calculated by using the actions at steps 110 to 120, and then the power conversion device can be independently controlled based on the target alternating-current electric signal.

In the power control method for the power system according to the embodiments of the present disclosure, the target alternating-current signal for adjusting the first converter of the power conversion device is determined based on the expected direct-current side power response value corresponding to the target power conversion device and the first electrical signal reference value at the alternating-current coupling point. The target alternating-current signal is then used to control the first converter, so as to adjust the power supply relationship between the at least one power conversion device and enable each power conversion device to reach a balanced state.

In some embodiments, the determining, based on the actual electrical signal and the first electrical signal reference value at the alternating-current coupling point, the first alternating-current side scheduling parameter value includes:
determining, based on the actual electrical signal and the first electrical signal reference value at the alternating-current coupling point, a first control signal; and
converting, based on a first converter parameter corresponding to the target power conversion device, the first control signal into the first alternating-current side scheduling parameter value for adjusting the first converter.

In this embodiment, the first converter parameter may include a parallel rated capacity corresponding to the target power conversion device, and a rated capacity, a rated current, a maximum current, a rated voltage, and a maximum voltage of a local device.

The first control signal may be expressed in different parameter types such as power, voltage, and current. In an actual execution process, a corresponding conversion formula can be selected for conversion, based on the different parameter types of the first control signal, to obtain the first alternating-current side scheduling parameter value.

For example, when the first control signal is a power, the conversion can be performed using the following conversion formula: the first alternating-current side scheduling parameter value = the first control signal ÷ a sum of the parallel rated capacities * the rated capacity of the local device.

For example, when the first control signal is a voltage, the conversion can be performed using the following conversion formula: the first alternating-current side scheduling parameter value = the first control signal ÷ a sum of the parallel rated capacities * the rated capacity of the local device * K1, where K1 represents a coefficient for converting the voltage into the power, including but not limited to the rated current, the maximum current, etc., of the local device.

For example, when the first control signal is a current, the conversion can be performed using the following conversion formula: the first alternating-current side scheduling parameter value = the first control signal ÷ a sum of the parallel rated capacities * the rated capacity of the local device * K2, where K2 represents a coefficient for converting the current into the power, including but not limited to the rated voltage, the maximum voltage, etc., of the local device.

In some embodiments, the determining, based on the actual electrical signal and the first electrical signal reference value at the alternating-current coupling point, the first control signal includes:
generating, based on a first difference between the actual electrical signal and the first electrical signal reference value, the first control signal.

In this embodiment, the first control signal can be obtained by controlling a difference between the actual electrical signal and the first electrical signal reference value at the alternating-current coupling point using a PI control algorithm, to enable the actual electrical signal at the alternating-current coupling point to track the first electrical signal reference value.

Of course, in other embodiments, the first control signal can also be determined based on the actual electrical signal and the first electrical signal reference value at the alternating-current coupling point using other control algorithms, which is not limited in the present disclosure.

In some embodiments, the determining, based on the first alternating-current side scheduling parameter value and the expected direct-current side power response value corresponding to the target power conversion device, the target alternating-current electric signal corresponding to the target power conversion device includes:
determining, based on the first alternating-current side scheduling parameter value and the expected direct-current side power response value, the target alternating-current electric signal; and
setting an upper threshold and/or a lower threshold for the target alternating-current electric signal to correct the target alternating-current electric signal.

In this embodiment, the specific method for determining the target alternating-current electric signal based on the first alternating-current side scheduling parameter value and the expected direct-current side power response value has been described in the above embodiments, and details thereof are omitted herein.

In some embodiments, the determined target alternating-current electric signal may be threshold-limited based on the upper threshold and the lower threshold to further maintain the normal operation of the power system.

The upper threshold and the lower threshold can be adaptively adjusted based on user customization or actual application scenarios. In some embodiments, each of the upper threshold and the lower threshold may include at least one of the second electrical signal reference value and the third electrical signal reference value.

The second electrical signal reference value is greater than the first electrical signal reference value, and the first electrical signal reference value is greater than the third electrical signal reference value.

In some embodiments, the second electrical signal reference value may be a maximum power value for the system to operate normally, and the third electrical signal reference value may be a minimum power value for the system to operate normally.

In some embodiments, the second electrical signal reference value may be determined based on a sampling error of the first converter and/or a maximum electrical signal of the external device connected to the power system under a normal operating condition.

In this embodiment, the external device may be a power consumption device or a power generation device.

The second electrical signal reference value may be the maximum electrical signal of the external device connected to the power system under the normal operating condition, or a value close to the maximum electrical signal of the external device connected to the power system under the normal operating condition.

Alternatively, the second electrical signal reference value may be determined based on the sampling error of the first converter, to enable an absolute value of a difference between the second electrical signal reference value and the first electrical signal reference value to at least encompass a sampling error of the first converter with respect to an alternating-current voltage.

It should be noted that no matter how the second electrical signal reference value is determined, it is necessary to ensure that the first electrical signal reference value is smaller than the second electrical signal reference value.

In some embodiments, the third electrical signal reference value is determined based on the sampling error of the first converter and/or the minimum electrical signal of the external device connected to the power system in the normal operating state.

In this embodiment, the external device may be a power consumption device or a power generation device.

The third electrical signal reference value may be the minimum electrical signal of the external device connected to the power system in the normal operating state, or a value close to the minimum electrical signal of the external device connected to the power system in the normal operating state.

Alternatively, the third electrical signal reference value may be determined based on the sampling error of the first converter, to enable an absolute value of a difference between the third electrical signal reference value and the first electrical signal reference value to at least encompass a sampling error of the first converter with respect to the alternating-current voltage.

It should be noted that no matter how the third electrical signal reference value is determined, the first electrical signal reference value shall be greater than the third electrical signal reference value.

In some embodiments, each of the first electrical signal reference value, the second electrical signal reference value, and the third electrical signal reference value may be a dynamically changing value.

In some embodiments, at least one of the first electrical signal reference value, the second electrical signal reference value, and the third electrical signal reference value may be set correspondingly based on an operating time period of the power system and/or a type of the external device connected to the power system.

In this embodiment, the external device may be a power consumption device or a power generation device, such as an electrical load or a third-party inverter.

In the actual execution process, different fixed values within the range can be set according to different time periods defined by a power system user, or according to a change in the type of the external device, the first electrical signal reference value adapted to the change may be set correspondingly, along with the second electrical signal reference value and the third electrical signal reference value that are linked thereto.

It should be noted that no matter how the electrical signal reference values are changed, it is necessary to ensure that the second electrical signal reference value is greater than the first electrical signal reference value, and the first electrical signal reference value is greater than the third electrical signal reference value.

In some embodiments, the setting the upper threshold and/or the lower threshold for the target alternating-current electric signal to correct the target alternating-current electric signal includes:
when the target alternating-current electric signal is greater than a second alternating-current electric signal, updating the target alternating-current electric signal to the second alternating-current electric signal.

In this embodiment, the second alternating-current electric signal is determined based on the actual electric signal and a second electric signal reference value at the alternating-current coupling point. The second electric signal reference value is greater than the first electric signal reference value.

In some embodiments, the second alternating-current electrical signal is determined based on the actual electrical signal and the second electrical signal reference value at the alternating-current coupling point, which may include:

determining, based on the actual electric signal and the second electric signal reference value at the alternating-current coupling point, the second alternating-current electric signal.

In some embodiments, the determining, based on the actual electrical signal and the second electrical signal reference at the alternating-current coupling point, the second alternating-current electrical signal value may include:
determining, based on the actual electrical signal and the second electrical signal reference value at the alternating-current coupling point, a second control signal; and
converting, based on the first converter parameter corresponding to the target power conversion device, the second control signal into a second alternating-current signal for adjusting the first converter.

In this embodiment, as shown in FIG. 5, the second control signal can be obtained by performing PI control based on a difference between the actual electrical signal and a second electrical signal reference value U2_REF at the alternating-current coupling point. Then, in combination with the first converter parameter corresponding to the target power conversion device, the second control signal is converted into the second alternating-current electrical signal for adjusting the first converter. As shown in FIG. 6, based on the type of the second control signal, which is power, voltage, or current, the corresponding conversion method is selected to convert the second control signal into the second alternating-current electrical signal. The specific conversion formula is similar to the conversion method of the first control signal, and details thereof are omitted herein.

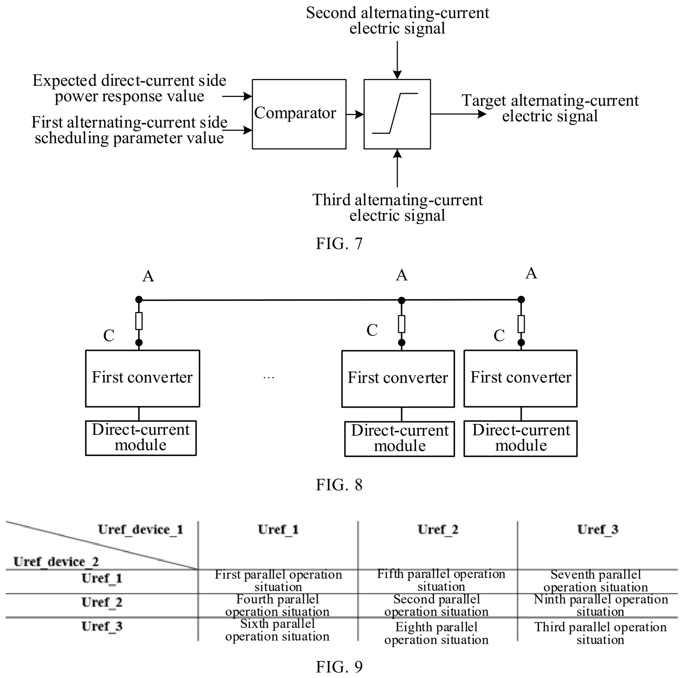

As shown in FIG. 7, when the target alternating-current electric signal is greater than the second alternating-current electric signal, it is considered that the target alternating-current electric signal exceeds a maximum threshold for the normal operation of the system. In this case, the target alternating-current electric signal is updated to the second alternating-current electric signal, enabling the target power conversion device to operate based on the second alternating-current electric signal, i.e., operate at a maximum output capacity that maintains the normal operating condition.

In some embodiments, the setting the upper threshold and/or the lower threshold for the target alternating-current electric signal to correct the target alternating-current electric signal may include:
when the target alternating-current electric signal is smaller than a third alternating-current electric signal, updating the target alternating-current electric signal to the third alternating-current electric signal.

In this embodiment, the third alternating-current electric signal is determined based on the actual electric signal and a third electric signal reference value at the alternating-current coupling point, and the third electric signal reference value is smaller than the first electric signal reference value.

In some embodiments, the third alternating-current electric signal is determined based on the actual electric signal and a third electric signal reference value at the alternating-current coupling point, which may include:
determining, based on the actual electric signal and the third electric signal reference value at the alternating-current coupling point, the third alternating-current electric signal.

In some embodiments, the determining, based on the actual electric signal and the third electric signal reference value at the alternating-current coupling point, the third alternating-current electrical signal may include:
determining, based on the actual electric signal and the third electric signal reference value at the alternating-current coupling point, a third control signal; and
converting, based on the first converter parameter corresponding to the target power conversion device, the third control signal, into a third alternating-current signal for adjusting the first converter.

In this embodiment, as shown in FIG. 5, the third control signal can be obtained by performing the PI control based on a difference between the actual electrical signal and the second electrical signal reference value at the alternating-current coupling point. Then, in combination with the first converter parameter corresponding to the target power conversion device, the third control signal is converted into the third alternating-current electrical signal for adjusting the first converter. As shown in FIG. 6, based on the type of the third control signal, which includes power, voltage, or current, the corresponding conversion method is selected, to convert the third control signal into the third alternating-current electrical signal. The specific conversion formula is similar to the conversion method of the first control signal, and details thereof are omitted herein.

As shown in FIG. 7, when the target alternating-current electric signal is smaller than the third alternating-current electric signal, it is considered that the target alternating-current electric signal is smaller than a minimum threshold for the normal operation of the system. In this case, the target alternating-current electric signal is updated to the third alternating-current electric signal, enabling the target power conversion device to operate based on the third alternating-current electric signal, i.e., operates at a minimum output capacity that maintains the normal operating condition.

In the power control method for the power system according to an embodiment of the present disclosure, by setting the upper threshold and/or the lower threshold of the target alternating-current electric signal, the operating parameters of the power conversion devices can be guaranteed to be maintained within a normal range while ensuring the balanced operation of the power conversion devices. In this way, an impact on and damage to the device are reduced to improve stability of the operation.

In some embodiments, the action at step 130 may include:
performing, based on the target alternating-current electric signal and an actual electrical signal at a controlled point corresponding to the alternating-current coupling point, closed-loop control on the target power conversion device.

In this embodiment, the PI control may be performed on the target power conversion device based on a difference between the target alternating-current electric signal and the actual electric signal.

In some embodiments, the controlled point may be the alternating-current coupling point, or the controlled point may be point C as shown in FIG. 8. There is line loss between the alternating-current coupling point and the actual controlled point, and an actual electrical signal corresponding to point C may be approximated as a sampling value of the first converter itself.

It can be understood that different selections of the controlled point may result in variations in the method for obtaining the actual electrical signal corresponding to the controlled point.

In some embodiments, when the controlled point is the alternating-current coupling point, the actual electrical signal is obtained based on a gateway sampling signal. When the controlled point is a non-alternating-current coupling point, the actual electrical signal is obtained based on an alternating-current side sampling signal of the power conversion device.

In this embodiment, if the controlled point is the alternating-current coupling point, a sampling value at the alternating-current coupling point can be directly obtained by a gateway device, and the sampled gateway sampling signal is determined as the actual electrical signal.

If the controlled point is a point as shown by point C in FIG. 8, the alternating-current side sampling signals of the power conversion devices (such as a sampling value of the first converter itself) can be determined as the actual electrical signal corresponding to the controlled point.

As the number of parallel-operated devices increases, a distance between the alternating-current coupling point and a physical position of each first converter increases, which in turn leads to an increase in the line loss between the alternating-current coupling point and the actual controlled point C. Through the above sampling method, a more accurate actual electrical signal can be acquired.

In the power control method for the power system according to the embodiments of the present disclosure, by selecting the corresponding actual electrical signal acquisition method based on the actual position of the controlled point, it is possible to reduce an influence of line loss in cables between the alternating-current coupling point and the actual controlled point when they are not the same point, on a control result, improve control precision and accuracy to better maintain balanced and stable operation of the system, and exhibit high control flexibility and adaptability.

In some embodiments, when the power system comprises one power conversion device, the actual electrical signal is obtained based on an alternating-current side sampling signal of the power conversion device and/or a gateway sampling signal. When the power system comprises a plurality of power conversion devices, the actual electrical signal is obtained based on an alternating-current side sampling signal of at least one of the plurality of power conversion devices, an average of alternating-current side sampling signals of the plurality of power conversion devices, and a gateway sampling signal.

In this embodiment, for a standalone scenario, the alternating-current side sampling signal of the power conversion device can be directly determined as the actual electrical signal corresponding to the controlled point, or the gateway sampling signal collected by the gateway device can be determined as the actual electrical signal.

For multi-device scenarios, the gateway sampling signal collected by the gateway device can be determined as the actual electrical signal, or an alternating-current side sampling signal of a certain power conversion device itself can be determined as the actual electrical signal of the controlled point.

In some embodiments, for the multi-device scenarios, the alternating-current side sampling signals of some or all of the power conversion devices of the power system can be averaged, and the average result can be determined as the actual electrical signal, to further improve authenticity of the actual electrical signal and thus improve the control accuracy.

The power system is taken as an example of a standalone system for description.

In standalone scenarios, the power system includes one power conversion device connected to an external device. The external device can be a load or a third-party power generation device.

In the standalone scenarios, a power of the third-party power generation device and/or the load is represented as Pload, and a first alternating-current side scheduling parameter value corresponding to the power conversion device is represented as Pac_1, where Pac_1 = Pload. A relationship between the first alternating-current side scheduling parameter value P ac_1 and an expected direct-current side power response value Pdc includes the following situations.

### First standalone situation: Pac_1=Pdc

When the external device is a power consumption device, such as a load, it is indicated that a direct-current side power output capacity of the power conversion device is just sufficient to supply power to the load. In this case, a target alternating-current electric signal is determined as the first alternating-current side scheduling parameter value, to enable the power conversion device to adjust an output of the first converter based on the first alternating-current side scheduling parameter value. As a result, a voltage reference Uref_device of a target power conversion device mapped to an alternating-current coupling point is equal to a first electrical signal reference value Uref_1.

This is manifested at the alternating-current coupling point as performing closed-loop control on an actual electric signal Upcc with the first electric signal reference value Uref_1 as a voltage reference. While Upcc is controlled to match Uref_1, a power output of the first converter is balanced with a power of the power consumption device.

When the external device is a power generation device, such as a third-party inverter, it is indicated that a direct-current side power absorption capacity of the power conversion device is just sufficient to accommodate a power of the third-party inverter. In this case, the target alternating-current electric signal is determined as the first alternating-current side scheduling parameter value, to enable the power conversion device to adjust an output of the first converter based on the first alternating-current side scheduling parameter value. As a result, the voltage reference Uref_device of the target power conversion device mapped to the alternating-current coupling point is equal to the first electrical signal reference value Uref_1.

This is manifested at the alternating-current coupling point as performing the closed-loop control on the actual electric signal Upcc with the first electric signal reference value Uref_1 as the voltage reference. While Upcc is controlled to match Uref_1, the power output of the first converter is balanced with the power of the power consumption device.

### Second standalone situation: Pac_1<Pdc

When the external device is a power consumption device, such as a load, it is indicated that the expected direct-current side output power of the power conversion device is greater than a power of the load. Possible reasons include but are not limited to: the power conversion device includes a photovoltaic device, and a maximum PV power is greater than Pac_1 and a total rechargeable power on a direct-current side. Specifically, the possible reasons may include the following. (a) For a pure photovoltaic device, the expected direct-current side power response value = maximum generating power > Pac_1. (b) For photovoltaic-energy storage device, the expected direct-current side power response value = maximum generating power - maximum charging power of energy storage device > Pac_1. This indicates that while the PV power meets Pac_1, it can charge the energy storage device at full power, with surplus PV power remaining. (c) For a photovoltaic-energy storage-charging device, the expected direct-current side power response value = maximum generating power - charging request power - maximum charging power of energy storage device > Pac_1. This indicates that while the PV power meets Pac_1, it can charge both the charging device and the energy storage device at full power, with surplus PV power remaining. (d) For a photovoltaic charging device, the expected direct-current side power response value = maximum generating power - charging request power > Pac_1. This indicates that while the PV power meets Pac_1, it can charge the charging device at full power, with surplus PV power remaining.

For the above situations, the target alternating-current electric signal may be determined as the expected direct-current side power response value to increase the power of the load, to enable the power of the first converter and the power of the external device to be balanced as much as possible.

In some embodiments, the upper threshold can be set for the target alternating-current electric signal to maximize the control power of the first converter in a case where the external device can operate normally. This enables devices with higher desired direct-current power to output more and devices with low desired direct-current power to output less, to achieve an energy distribution among the devices. This is manifested at the alternating-current coupling point as performing the closed-loop control on Upcc with a second electrical signal reference value Uref_2 as the voltage reference, where an output of the inverter is limited while Upcc is raised to Uref_2 to increase the power of the load. In this way, the first converter responds to a second alternating-current electric signal Pac_2 to balance with the power of the load. An expected voltage reference value is adjusted based on the second control reference to adjust the inverter output, i.e., Uref_device = Uref_2.

When the external device is a power generation device, it is indicated that a sum of maximum charging powers of rechargeable devices on the direct-current side is smaller than a total PV power. That is, a power input capacity of the power conversion device is not enough to accommodate a power of the power generation device. Possible reasons include but are not limited to the following. (a) For a pure photovoltaic device, the expected direct-current side power response value = maximum generating power > Pac_1. (b) For a photovoltaic-energy storage device, the expected direct-current side power response value = maximum generating power - maximum charging power of energy storage device > Pac_1. This indicates that the energy storage device is charged at full power, and there is still surplus photovoltaic power including that from the external device. (c) For a photovoltaic-energy storage-charging device, the expected direct-current side power response value = maximum generating power -charging request power - maximum charging power of energy storage device > Pac_1. This indicates that the charging device and both the energy storage device are charged at full power, and there is still the surplus photovoltaic power including that from the external device. (d) For a photovoltaic charging device, the expected direct-current side power response value = maximum generating power - charging request power > Pac_1. This indicates that the charging device is charged at full power, and there is still the surplus photovoltaic power including that from the external device. (e) For an energy storage and charging device, the expected direct-current side power response value = charging request power - maximum charging power of energy storage device > Pac_1. This indicates that both the charging device and the energy storage device are charged at full power, and there is still the surplus photovoltaic power including that from the external device.

For the above situation, the target alternating-current electric signal may be determined as the expected direct-current side power response value to reduce the power of the external power generation device, enabling the power of the first converter and the power of the external device to be balanced as much as possible.

In some embodiments, the upper threshold can also be set for the target alternating-current electric signal to maximize the control power of the first converter while ensuring that the external device can operate normally. This is manifested at the alternating-current coupling point as performing closed-loop control on Upcc with Uref_2 as the voltage reference, where Upcc is raised to Uref_2, and the power of the power generation device is reduced. The first converter responds to the second alternating-current electric signal Pac_2 to balance with the power of the load, i.e., Uref_device = Uref_2.

### Third standalone situation: Pac_1 > Pdc

When the external device is a power consumption device, such as a load, it means that the expected direct-current side output power of the power conversion device is smaller than a power of the load. Possible reasons include but are not limited to: a sum of the maximum generating power and all dischargeable powers on a direct-current side is greater than a sum of powers of loads on the direct-current side and an alternating-current side. Specifically, the possible reasons may include the following. (a) For a pure photovoltaic device, the expected direct-current side power response value=the maximum generating power < Pac_1. (b) For a photovoltaic-energy storage device, the expected direct-current side power response value = maximum generating power + maximum discharging power of energy storage device < Pac_1. This indicates that a sum of a PV power and a maximum discharging power of the energy storage is smaller than Pac_1. (c) For a photovoltaic-energy storage-charging device, the expected direct-current side power response value = maximum generating power - charging request power + maximum discharging power of energy storage device < Pac_1. This indicates that the sum of the PV power and the maximum discharging power of the energy storage device is smaller than a sum of a charging power of a charging station and Pac_1. (d) For a pure-energy storage device, the expected direct-current side power response value = maximum discharging power of energy storage device < Pac_1. This indicates that the maximum discharging power of the energy storage device is smaller than Pac_1. (e) For a photovoltaic charging device, the expected direct-current side power response value = maximum generating power - charging request power <Pac_1, which indicates that the PV power is smaller than the sum of the charging power of the charging station and Pac_1; (f) For an energy-storage and charging device, the expected direct-current side power response value = maximum discharging power of energy storage device - charging request power < Pac_1. this indicates that the maximum discharging power of the energy storage device is smaller than the sum of the charging power of the charging station and Pac_1.

For the above situation, the target alternating-current electric signal can be determined as the expected direct-current side power response value to reduce the power of the load, and thus to balance the power of the first converter and the power of the external device as much as possible.

In some embodiments, the lower threshold can be set for the target alternating-current electric signal to minimize the control power of the first converter while ensuring that the external device can operate normally. This is manifested at the alternating-current coupling point as performing closed-loop control of Upcc with a third alternating-current electric signal Uref_3 as the voltage reference, where while Upcc is reduced to Uref_3, the power of the load is reduced. In this way, the inverter responds to the third alternating-current electric signal Pac_3 to balance with the power of the load, i.e., Uref_device=Uref_3.

When the external device is a power generation device, it is indicated that an expected input power of the power conversion device is greater than the power of the power generation device. Possible reasons include but are not limited to a sum of a total PV power and all dischargeable powers on the direct-current side being smaller than total powers of loads on the direct-current side. Specifically, the possible reasons may include the following. (a) For the photovoltaic-energy storage-charging device, the expected direct-current side power response value =maximum generating power - charging request power + maximum discharging power of energy storage device < Pac_1. This indicates that a sum of a total PV power including that from the power generation device and a maximum discharge power of energy storage device is smaller than the charging power of the charging station. (b) For the photovoltaic charging device, the expected direct-current side power response value = maximum generating power - charging request power < Pac_1. This indicates that the total PV power including that from the power generation device is smaller than the charging power of the charging station. (c) For the energy-storage and charging device, the expected direct-current side power response value = maximum discharging power of energy storage equipment - charging request power < Pac_1. This indicates that the sum of the total PV power including that from the power generation device and the maximum discharging power of the energy storage device is smaller than the charging power of the charging station.

For the above situation, the target alternating-current electric signal is determined as the expected direct-current side power response value to increase the generating power of the external device, and thus to balance the power of the first converter and the power of the external device as much as possible.

In some embodiments, the lower threshold can be set for the target alternating-current signal to maximize the control power of the first converter in a case where the external device can operate normally. This is manifested at the alternating-current coupling point as performing the closed-loop control on Upcc with the third alternating-current signal Uref_3 as the voltage reference, where while Upcc is reduced to Uref_3, an output power of the power generation device is increased and its own power input power is decreased. In this way, the first converter responds to the third alternating-current signal Pac_3 to balance with the power of the power generation load. At this time, Uref_device=Uref_3.

In some embodiments, when the power system includes a plurality of power conversion devices, the plurality of power conversion devices can be regarded as a whole and equivalent to one power conversion device. The power magnitude between the power conversion device and the external device determines a voltage of a grid-connected point (controlled to one of Uref_1, Uref_2, or Uref_3), and also determines a total power output of the inverters (one of Pac_1, Pac_2, or Pac_3) . On this basis, the devices in the different operating states are equivalent to performing the closed-loop control on Upcc using the different voltage references at the alternating-current coupling point, a power distribution between devices is realized, achieving the balanced control in the multi-device scenario.

The multi-device scenario is taken as an example to illustrate an implementation effect of the method of the present disclosure.

Two parallel-operated devices are taken as an example, that is, each of two power conversion devices is connected to the alternating-current coupling point and connected to the external device via the alternating-current coupling point. The two power conversion devices are represented by a first device and a second device below. A first alternating-current side scheduling parameter value corresponding to the first device is represented as P1_ac. A first alternating-current side scheduling parameter value corresponding to the second device is represented as P2_dc. A second alternating-current side scheduling parameter value corresponding to the first device and the second device as a whole is represented as P1_ac+P2_ac. An expected direct-current side power response value corresponding to the first device is represented as P1_dc. An expected direct-current side power response value corresponding to the second device is represented as P2_dc. An alternating-current power corresponding to the external device is represented as Pload. P1_ac+P2_ac=Pload.

By determining a relationship between the first alternating-current side scheduling parameter value corresponding to each of the power conversion devices and the expected direct-current side power response value corresponding to the power conversion device, and following the above steps 110 to 130, a target alternating-current electric signal corresponding to each of the power conversion devices can be obtained. During operation of the power conversion devices based on their corresponding target alternating-current electric signal, voltage references mapped from the first device and the second device to the alternating-current coupling points are represented as Uref_device_1 and Uref_device_2, respectively.

FIG. 9 illustrates various situations, and each of the situations is described in detail below.
1. The power conversion devices operate based on their corresponding target alternating-current electric signals, and the voltage references thereof mapped to the alternating-current coupling point is as follows. The voltage reference corresponding to one of the devices is the first electrical signal reference value Uref_1, and the voltage reference corresponding to another one of the devices is the second electrical signal reference value Uref_2, such as a fourth parallel operation situation and a fifth parallel operation situation.

Hereinafter, a case where Uref_device_1=Uref_1 and Uref_device_2=Uref_2 will be taken as an example for illustration.
1) When the external device is a power consumption device, it is manifested at the alternating-current coupling point as the first device performing closed-loop control on Upcc with Uref_1 as the voltage reference, and the second device performing the closed-loop control on Upcc with Uref_2 as the voltage reference. Since Uref_2>Uref_1, the second device can prioritize a power output.

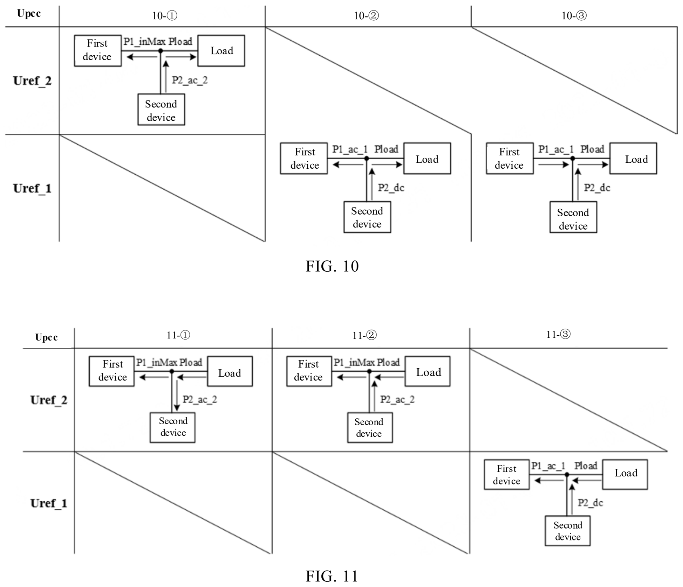

When the actual electrical signal Upcc of the controlled point is controlled to Uref_2, it means that Pac_1+Pac_2<Pdc, where Pdc=P1_dc+P2_dc. In this case, the two parallel-operated devices are equivalent to the second standalone situation. In this case, the first device has already absorbed the power at its maximum capacity, and the second device follows scheduling of a second control signal of a total scheduling unit, which indicates that the second device still has a certain expected output power while meeting a total maximum absorbed power of the load and the first device, i.e., P2_out≤P2_dc. A power flow is shown in FIG. 10-①.

When the actual electrical signal Upcc of the controlled point is controlled to Uref_1, it means that Pac_1+Pac_2=Pdc, and the two parallel-operated devices are equivalent to the first standalone situation. In this case, the second device has output all expected direct-current side output power, and the first device follows scheduling of a first control signal of the general scheduling unit. Specifically, when an output power of the second device is greater than the power of the load, the first device and the power of the load jointly absorb the output power of the second device. In this case, the power flow is shown in FIG. 10-②. When the output power of the second device is smaller than the power of the load, the remaining required power for the load is supplied by the first device. In this case, the power flow is shown in FIG. 10-③.

2) When the external device is a power generation device, it is manifested at the alternating-current coupling point as the first device performing closed-loop control on Upcc with Uref_1 as the voltage reference, and the second device performing the closed-loop control on Upcc with Uref_2 as the voltage reference. Since Uref_2>Uref_1, the first device prioritizes absorbing a power from the power generation device.

When the actual electrical signal Upcc of the controlled point is controlled to Uref_2, the two parallel-operated devices are equivalent to the second standalone situation. In this case, the first device has absorbed the power at its maximum capacity, and the second device follows the scheduling of the second control signal of the general scheduling unit, which indicates that together with the power generation device, the second device still have a certain expected output power. Specifically, when a power of a power generation load is greater than a maximum power absorption capacity of the first device, the second device assists in absorbing power. In this case, the power flow is shown in FIG. 11-①. When the power of the power generation device is smaller than the maximum power absorption capacity of the first device, the second device outputs power as much as possible. In this case, the power flow is shown in FIG. 11-②.

When the actual electrical signal Upcc of the controlled point is controlled to Uref_1, the two parallel-operated devices are equivalent to the first standalone situation. In this case, the second device has output all the expected direct-current side output power, and the first device follows the scheduling of the first control signal of the general scheduling unit. The first device absorbs the power of the power generation load and an expected output power of the second device. In this case, the power flow is shown in FIG. 11-③.

2. The power conversion devices operate based on their corresponding target alternating-current electric signals, and the voltage references thereof mapped to the alternating-current coupling point is as follows. The voltage reference corresponding to one of the devices is the first electrical signal reference value Uref_1, and the voltage reference corresponding to another one of the devices is the third electrical signal reference value Uref_3, such as a sixth parallel operation situation and a seventh parallel operation situation.

Hereinafter, a case where Uref_device_1=Uref_1 and Uref_device_2=Uref_3 will be taken as an example for illustration.
1) When the external device is a power consumption device, it is manifested at the alternating-current coupling point as the first device performing closed-loop control on Upcc with Uref_1 as the voltage reference, and the second device performing the closed-loop control on Upcc with Uref_3 as the voltage reference. The first device prioritizes a power output.

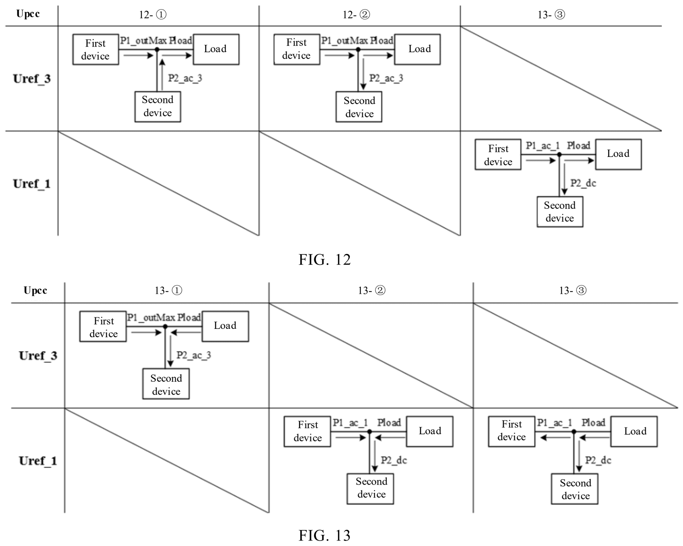

When the actual electrical signal Upcc of the controlled point is controlled to Uref_3, the two parallel-operated devices are equivalent to the third standalone situation. In this case, the first device has output power at its maximum capacity, and the second device follows scheduling of a third control signal of the general scheduling unit, which indicates that in this case, the output power of the first device still does not meet an expected absorption power of the second device and the power of the load. Specifically, when the power of the load is greater than a maximum output power of the first device, the power flow is shown in FIG. 12-①. When the power of the load is smaller than the maximum output power of the first device, by reducing Upcc to Uref_3, both the power of the load and the expected absorption power of the second device are reduced, enabling the first device to maximize its capability to meet balance of the second device with the power of the load. In this case, the power flow is shown in FIG. 12-②.

When the actual electrical signal Upcc of the controlled point is controlled to Uref_1, the two parallel-operated devices are equivalent to the first standalone situation. In this case, the second device has absorbed all the direct-current side expected absorption powers, and the first device follows the scheduling of the first control signal of the general scheduling unit, which indicates that the first device can output the expected direct-current side input power of the second device while meeting the power of the load, that is, the first device supplies power to the second device and the load to achieve the balance. In this case, the power flow is shown in FIG. 12-③.

2) When the external device is a power generation device, it is manifested at the alternating-current coupling point as the first device performing closed-loop control on Upcc with Uref_1 as the voltage reference, and the second device performing the closed-loop control on Upcc with Uref_3 as the voltage reference. The second device prioritizes absorbing a power from the power generation device.

When the actual electrical signal Upcc of the controlled point is controlled to Uref_3, the two parallel-operated devices are equivalent to the third standalone situation. In this case, the first device has output power to its maximum capacity, and the second device follows the scheduling of the third control signal of the general scheduling unit. This indicates that the first device and the power generation load have output power to their maximum capacities, but still cannot meet an expected direct-current side absorption power of the second device. In this case, the second device reduces Upcc to Uref_2, which lower the expected absorption power while increasing the powers of the first device and the power generation load, thereby enabling the maximum power output of the first device and the power generation load to balance with the expected absorption power of the second device, as shown in FIG. 13-①.

When the actual electrical signal Upcc of the controlled point is controlled to Uref_1, the two parallel-operated devices are equivalent to the first standalone situation. In this case, the second device has absorbed all the expected direct-current side absorption power, and the first device follows the scheduling of the first control signal of the general scheduling unit. Specifically, when the power of the power generation device is smaller than the expected absorption power of the second device, the first device assists in providing a power required by the second device, as shown in FIG. 13-②. When the power of the power generation device is greater than the expected absorption power of the second device, the first device absorbs a remaining power, as shown in FIG. 13-③. In this way, the balance is achieved.

3. The power conversion devices operate based on their corresponding target alternating-current electric signals, and the voltage references thereof mapped to the alternating-current coupling point is as follows. The voltage reference corresponding to one of the devices is the first electrical signal reference value Uref_1, and the voltage reference corresponding to another one of the devices is the third electrical signal reference value Uref_3, such as an eighth parallel operation situation and a ninth parallel operation situation.

Hereinafter, a case where Uref_device_1=Uref_2 and Uref_device_2=Uref_3 will be taken as an example for illustration.
1) When the external device is a power consumption device, it is manifested at the alternating-current coupling point as the first device performing closed-loop control on Upcc with Uref_2 as the voltage reference, and the second device performing the closed-loop control on Upcc with Uref_3 as the voltage reference. The first device prioritizes a power output.

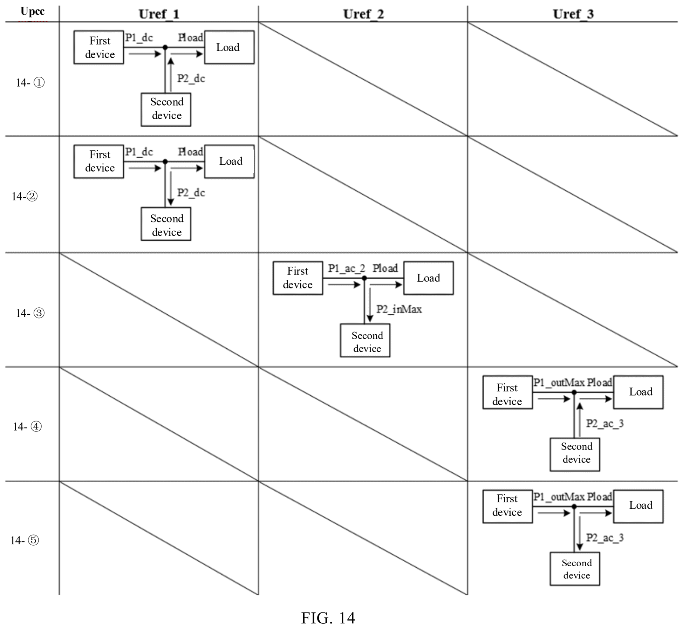

When the actual electrical signal Upcc of the controlled point is controlled to Uref_1, the two parallel-operated devices are equivalent to the first standalone situation. In this case, both the first device and the second device reach their respective expected input power or expected output power while meeting the power of the load to achieve the balance. When expected power flow of the first device is the same as that of the second device, a power distribution is shown in FIG. 14-①. When the expected power flow of the first device is opposite to that of the second device, a power distribution is shown in FIG. 14-②.

When the actual electrical signal Upcc of the controlled point is controlled to Uref_2, the two parallel-operated devices are equivalent to the second standalone situation. In this case, the second device has absorbed power at its maximum capacity, and the first device follows the scheduling of the second control signal of the general scheduling unit, and the first device still has a certain expected output power while meeting a maximum absorption power of the load and the second device. The power flow is shown in FIG. 14-③.

When the actual electrical signal Upcc of the controlled point is controlled to Uref_3, the two parallel-operated devices are equivalent to the third standalone situation. In this case, the first device has output power at its maximum capacity, and the second device follows the scheduling of the third control signal of the general scheduling unit, which indicates that the maximum output power of the first device still cannot meet the expected absorption power of the second device and the power of the load. Specifically, when the power of the load is greater than the maximum output power of the first device, the power flow is as shown in FIG. 14-④. When the power of the load is smaller than the maximum output power of the first device, by reducing Upcc to Uref_3, the power of the load and the expected absorption power of the second device are reduced, enabling the first device to meet the powers of the second device and the load at its maximum capacity, to achieve the balance. In this case, the power flow is as shown in FIG. 14-⑤.

2) When the external device is a power generation device, it is manifested at the alternating-current coupling point as the first device performing the closed-loop control on Upcc with Uref_2 as the voltage reference, and the second device performing the closed-loop control on Upcc with Uref_3 as the voltage reference. The second device prioritizes absorbing a power of the power generation device.

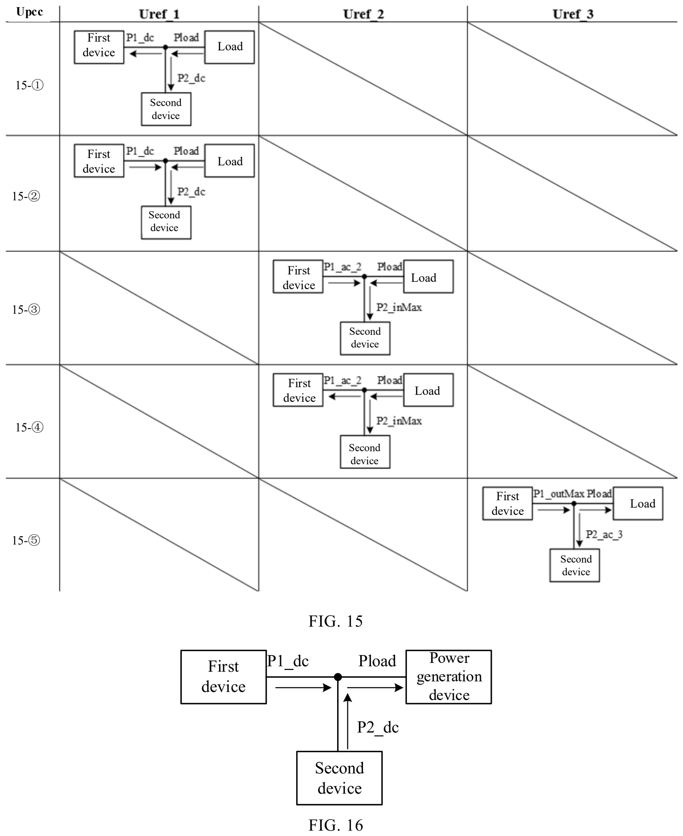

When the actual electrical signal Upcc of the controlled point is controlled to Uref_1, the two parallel-operated devices are equivalent to the first standalone situation. In this case, both the first device and the second device reach their respective expected input power or expected output power while meeting the power of the load to achieve the balance. When the expected power flow of the first device is same as that of the second device, the power distribution is shown in FIG. 15-①. When the expected power flow of the first device is opposite to that of the second device, the power distribution is shown in FIG. 15-②.

When the actual electrical signal Upcc of the controlled point is controlled to Uref_2, the two parallel-operated devices are equivalent to the second standalone situation. In this case, the second device has absorbed power at its maximum capacity, and the first device follows the scheduling of the second control signal of the general scheduling unit, which indicates that there is still a certain expected output power when the second device operates together with the power generation device. Specifically, when the power of the power generation load is greater than the maximum power absorption capacity of the second device, the first device assists in absorbing power. In this case, the power flow is shown in FIG. 15-③. When the power of the power generation device is smaller than the maximum power absorption capacity of the first device, the second device outputs power as much as possible. In this case, the power flow is shown in FIG. 15-④.

When the actual electrical signal Upcc of the controlled point is controlled to Uref_3, the two parallel-operated devices are equivalent to the third standalone situation. In this case, the first device has output power at its maximum capacity, and the second device follows the scheduling of the third control signal of the general scheduling unit, which indicates that both the first device and the power generation device have output power to their respective maximum capacity, but still cannot meet the expected direct-current side absorption power of the second device. In this case, the second device reduces Upcc to Uref_2, which lowers the expected absorption power while increasing the powers of the first device and the power generation device, thereby enabling the maximum power output of the first device and the power generation device to balance with the expected absorption power of the second device, as shown in FIG. 15-⑤.

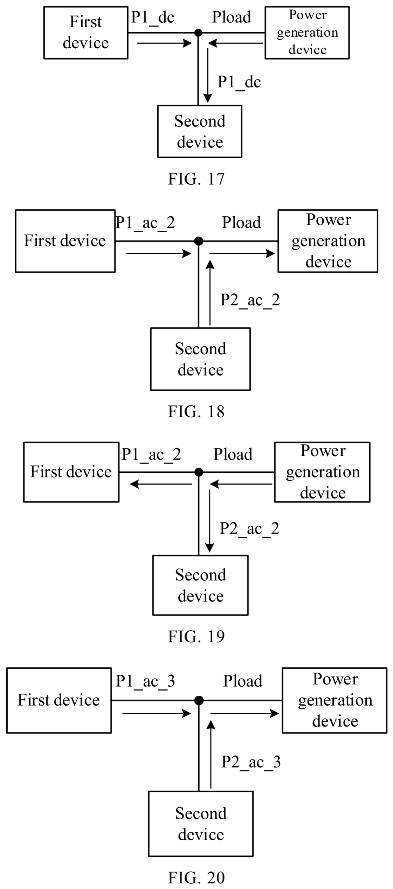

4. The power conversion devices operate based on their corresponding target alternating-current electric signals, and each of the voltage references thereof mapped to the alternating-current coupling point is the first electrical signal reference value Uref_1, i.e., a first parallel operation situation: Uref_device_1=Uref_device_2=Uref_1.
1) When the external device is a power consumption device, the two parallel-operated devices are equivalent to the first standalone situation, which indicates that combined power output capability of the first device and the second device is sufficient to supply power to the load. In this case, both the first device and the second device follow the scheduling of the first control signal of the general scheduling unit. It is manifested at the alternating-current coupling point as performing the closed-loop control on Upcc with Uref_1 as the voltage reference, where while Upcc is controlled to be Uref_1, an power output of the inverter and the power of the load are balanced. In this case, the power flow is shown in FIG. 16.
2) When the external device is a power generation device, the two parallel-operated devices are equivalent to the first standalone situation, which indicates that the combined power input capacity of the first device and the second device is sufficient to absorb the power of the power generation device. In this case, both the first device and the second device follow the scheduling of the first control signal of the general scheduling unit. It is manifested at the alternating-current coupling point as performing the closed-loop control on Upcc with Uref_1 as the voltage reference, where while Upcc is controlled to be Uref_1, an power input of the inverter and the power of the power generation load are balanced. In this case, the power flow is shown in FIG. 17.

5. The power conversion devices operate based on their corresponding target alternating-current electric signals, and each of the voltage references thereof mapped to the alternating-current coupling point is the second electrical signal reference value Uref_2, i.e., a second parallel operation situation: Uref_device_1 = Uref_device_2 = Uref_2.
1) When the external device is a power consumption device, the two parallel-operated devices are equivalent to the second standalone situation, which indicates that a combined expected output power of the first device and the second device is greater than the power of the load. In this case, both the first device and the second device follow the scheduling of the second control signal of the general scheduling unit. It is manifested at the alternating-current coupling point as performing the closed-loop control on Upcc with Uref_2 as the voltage reference, where the power output of the first device and the second device is limited while Upcc is raised to Uref_2 to increase the power of the load. As a result, the power output of the inverter and the power of the load are balanced. In this case, the power flow is shown in FIG. 18.
2) When the external device is a power generation device, the two parallel-operated devices are equivalent to the second standalone situation, which indicates that a combined power input capacity of the first device and the second device is insufficient to absorb the power of the power generation device. In this case, both the first device and the second device follow the scheduling of the third control signal of the general scheduling unit. It is manifested at the alternating-current coupling point as performing the closed-loop control on Upcc with Uref_2 as the voltage reference, where Upcc is raised to Uref_2, the power of the power generation device is reduced, enabling the power output of the inverter to be balanced with the power of the power generation device. In this case, the power flow is shown in FIG. 19.

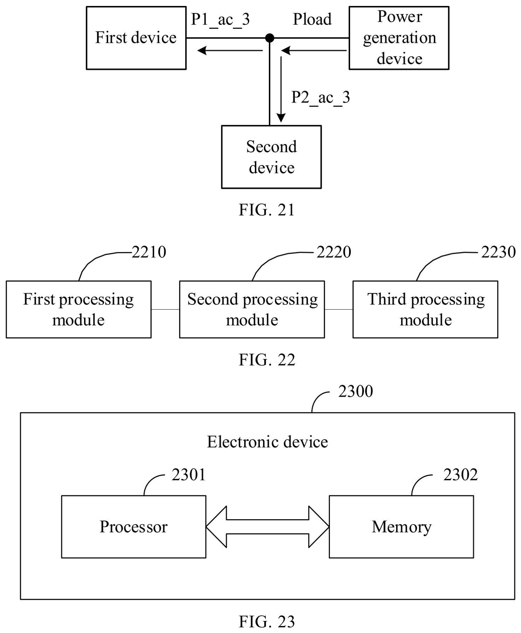

6. The power conversion devices operate based on their corresponding target alternating-current electric signals, and each of the voltage references thereof mapped to the alternating-current coupling point is the third electric signal reference value Uref_3, i.e., parallel operation situation 3: Uref_device_1=Uref_device_2=Uref_3.
1) When the external device is a power consumption device, the two parallel-operated devices are equivalent to the third standalone situation, which indicates a combined output capacity of the first device and the second device is smaller than the power of the load. In this case, both the first device and the second device follow the scheduling of the third control signal of the general scheduling unit. It is manifested at the alternating-current coupling point as performing the closed-loop control on Upcc with Uref_3 as the voltage reference, where the power of the load is reduced while reducing Upcc to Uref_3, enabling the first device and the second device to power output at their maximum capacity to balance with the power of the load. In this case, the power flow is shown in FIG. 20.
2) When the external device is a power generation device, the two parallel-operated devices are equivalent to the third standalone situation, which indicates that combined expected input power of the first device and the second device is greater than the power of the power generation device. In this case, both the first device and the second device follow the scheduling of the third control signal of the general scheduling unit. It is manifested at the alternating-current coupling point as performing the closed-loop control on Upcc with Uref_3 as the voltage reference, where while reducing Upcc to Uref_3, the output of the power generation device is increased and the input power of the power generation device is reduced, enabling the power input of the inverter to be balanced with the power of the power generation device. In this case, the power flow is shown in FIG. 21.

It was found after many experiments and verifications that by adopting the method according to the present disclosure, the larger equivalent voltage control reference value at the alternating-current coupling point prioritize power output. Conversely, the lower equivalent voltage control reference value prioritize power absorbion. This mechanism facilitates the energy distribution and energy transfer among the devices, ensuring that the expected output power is given priority and that energy supply is also prioritized for the device with expected input power, thereby achieving the balanced control.

The power control method for the power system according to the embodiments of the present disclosure may have an execution subject as the power control apparatus for the power system. In the embodiments of the present disclosure, the power control method for the power system executed by the power control apparatus for the power system is taken as an example to illustrate the power control apparatus for the power system according to the embodiments of the present disclosure.

Embodiments of the present disclosure also provide a power control apparatus for a power system.

As shown in FIG. 22, the power system includes at least one power conversion device and a control module electrically connected to each of the at least one power conversion device. Each of the at least one power conversion device is connected to an alternating-current coupling point. Each of the at least one power conversion device includes a first converter and at least one direct-current module. Each of the at least one power conversion device is configured to be connected to an external device via the alternating-current coupling point. In each of the at least one power conversion device, each of the least one direct-current module is connected to the first converter via a direct-current coupling point. The power control apparatus for the power system includes a first processing module 2210, a second processing module 2220, and a third processing module 2230.

The first processing module 2210 is configured to obtain an expected direct-current side power response value corresponding to a target power conversion device among the at least one power conversion device.

The second processing module 2220 is configured to determine, based on the expected direct-current side power response value corresponding to the target power conversion device, and an actual electric signal and a first electric signal reference value at the alternating-current coupling point, a target alternating-current electric signal corresponding to the target power conversion device.

The third processing module 2230 is configured to control, based on the target alternating-current electric signal, an operating state of the target power conversion device, to adjust a power supply relationship between the at least one power conversion device.

In the power control apparatus for the power system according to the embodiments of the present disclosure, the target alternating-current signal for adjusting the first converter of the at least one power conversion device is determined based on the expected direct-current side power response value corresponding to the target power conversion device and the first electrical signal reference value at the alternating-current coupling point. The target alternating-current signal is theb used to control the the first converter, so as to adjust the power supply relationship between the at least one power conversion device and enable each power conversion device to reach the balanced state.

In some embodiments, the second processing module 2220 may further be configured to:
determine, based on the actual electrical signal and the first electrical signal reference value at the alternating-current coupling point, a first alternating-current side scheduling parameter value; and
determine, based on the first alternating-current side scheduling parameter value and the expected direct-current side power response value corresponding to the target power conversion device, the target alternating-current electric signal corresponding to the target power conversion device.

In some embodiments, the second processing module 2220 may further be configured to:

when an absolute value of a difference between the first alternating-current side scheduling parameter value and the expected direct-current side power response value is smaller than a first threshold, determine the target alternating-current electric signal as the first alternating-current side scheduling parameter value; and
when the absolute value of the difference between the first alternating-current side scheduling parameter value and the expected direct-current side power response value is greater than or equal to the first threshold, determine the target alternating-current electric signal as the expected direct-current side power response value.

In some embodiments, the second processing module 2220 may further be configured to:
determine, based on the first alternating-current side scheduling parameter value and the expected direct-current side power response value, the target alternating-current electric signal; and
set an upper threshold and/or a lower threshold for the target alternating-current electric signal to correct the target alternating-current electric signal.

In some embodiments, the second processing module 2220 may further be configured to:
when the target alternating-current electric signal is greater than a second alternating-current electric signal, update the target alternating-current electric signal to the second alternating-current electric signal. The second alternating-current electric signal is determined based on the actual electrical signal and a second electrical signal reference value at the alternating-current coupling point. The second electrical signal reference value is greater than the first electrical signal reference value.

In some embodiments, the second processing module 2220 may further be configured to:
when the target alternating-current electric signal is smaller than a third alternating-current electric signal, update the target alternating-current electric signal to the third alternating-current electric signal. The third alternating-current electric signal is determined based on the actual electrical signal and a third electrical signal reference value at the alternating-current coupling point. The third electrical signal reference value is smaller than the first electrical signal reference value.

In some embodiments, the second processing module 2220 may further be configured to:
determine, based on the actual electrical signal and the first electrical signal reference value at the alternating-current coupling point, a first control signal; and
convert, based on a first converter parameter corresponding to the target power conversion device, the first control signal into the first alternating-current side scheduling parameter value for adjusting the first converter.

In some embodiments, the second processing module 2220 may further be configured to:
generate, based on a first difference between the actual electrical signal and the first electrical signal reference value, the first control signal.

In some embodiments, the third processing module 2230 may further be configured to:
perform, based on the target alternating-current electric signal and an actual electrical signal of a controlled point corresponding to the alternating-current coupling point, closed-loop control on the target power conversion device.

In some embodiments, the third processing module 2230 may further be configured to:
when the power system comprises one power conversion device, obtain the actual electrical signal based on an alternating-current side sampling signal of the power conversion device and/or a gateway sampling signal; and
when the power system comprises a plurality of power conversion devices, obtain the actual electrical signal based on an alternating-current side sampling signal of at least one of the plurality of power conversion devices, an average of alternating-current side sampling signals of the plurality of power conversion devices, and a gateway sampling signal.

In some embodiments, the first processing module 2210 may further be configured to:
for each of the at least one direct-current module of the target power conversion device, determine, based on a type of the direct-current module of the target power conversion device, an expected sub-direct-current side power response value corresponding to the direct-current modules; and
determine, based on a sum of the expected sub-direct-current side power response value corresponding to the at least one direct-current module, the expected direct-current side power response value corresponding to the target power conversion device.

In some embodiments, the first processing module 2210 may further be configured to:
when the direct-current module is a power generation device, determine a maximum generation power corresponding to the power generation device as the expected sub-direct-current side power response value corresponding to the power generation device;
when the direct-current module is a power consumption device, determine a charging request power corresponding to the power consumption device as the expected sub-direct-current side power response value corresponding to the power consumption device; and
when the direct-current module is an energy storage device, determine, based on types of other direct-current modules connected to the energy storage device and a first alternating-current side scheduling parameter value, the expected sub-direct-current side power response value corresponding to the energy storage device, wherein the first alternating-current side scheduling parameter value is determined based on the actual electrical signal and the first electrical signal reference value at the alternating-current coupling point.

In some embodiments, the first processing module 2210 may further be configured to:
when each of the other direct-current modules connected to the energy storage device is an energy storage device or no other devices connected to the energy storage device exist, determine the expected sub-direct-current side power response value corresponding to the energy storage device based on an absolute value of a maximum charge and discharge power that corresponds to the energy storage device, an absolute value of the first alternating-current side scheduling parameter value, and the charge and discharge state corresponding to the maximum charge and discharge power;
when the other direct-current modules connected to the energy storage device comprise at least one of the power generation device and the power consumption device, determine, based on the first alternating-current side scheduling parameter value and an expected sub-direct-current side power response value corresponding to a target module, an energy storage scheduling power corresponding to the energy storage device, wherein the target module comprises the power generation device and/or the power consumption device connected to the energy storage device; and
determine the expected sub-direct-current side power response value corresponding to the energy storage device based on the energy storage scheduling power corresponding to the energy storage device, a charge and discharge state corresponding to the energy storage scheduling power, and the maximum charge and discharge power corresponding to the energy storage device,.

In some embodiments, the first processing module 2210 may further be configured to:
for each of the at least one direct-current module of the target power conversion device, determine, based on at least one of the type of the direct-current module, a performance parameter of the direct-current module, power scheduling of the direct-current module, and a charging request power corresponding to the direct-current module, the expected sub-direct-current side power response value corresponding to the direct-current module.

In some embodiments, the apparatus may further include a fourth processing module configured to: determine the first electrical signal reference value based on a rated voltage of a power grid in an area where the power system is located, and enable the external device connected to the power system to operate normally.

In some embodiments, the fourth processing module may further be configured to:
determine a second electrical signal reference value based on a sampling error of the first converter and/or a maximum electrical signal of the external device connected to the power system under a normal operating condition. The first electrical signal reference value is smaller than the second electrical signal reference value.

In some embodiments, the fourth processing module may further be configured to:
determine a third electrical signal reference value based on the sampling error of the first converter and/or the minimum electrical signal of the external device connected to the power system under the normal operating condition. The first electrical signal reference value is greater than the third electrical signal reference value.

In some embodiments, the fourth processing module may further be configured to:
set, based on an operating time period of the power system and/or a type of the external device connected to the power system, at least one of the first electric signal reference value, a second electric signal reference value, and a third electric signal reference value in a corresponding manner. The second electric signal reference value is greater than the first electric signal reference value. The first electric signal reference value is greater than the third electric signal reference value.

The power control apparatus of the power system according to the embodiments of the present disclosure may be an electronic device, or a component in the electronic device, such as an integrated circuit or a chip. The electronic device may be a terminal, or may be other equipment except a terminal. Exemplarily, the electronic device may be a mobile phone, a tablet computer, a laptop computer, a PDA, an in-vehicle electronic device, a mobile Internet device (MID), an augmented reality (AR)/virtual reality (VR) device, a robot, a wearable device, an ultra-mobile personal computer (UMPC), a netbook or a personal digital assistant (PDA), etc. It may also be a server, a network attached storage (NAS), a personal computer (PC), a television (TV), a teller machine or a self-service machine, etc., which is not specifically limited in the embodiments of the present disclosure.

The power control apparatus for the power system according to the embodiments of the present disclosure may be a device having an operating system. The operating system may be an Android operating system, an IOS operating system, or other possible operating systems, which are not specifically limited in the embodiments of the present disclosure.

The power control apparatus for the power system according to the embodiments of the present disclosure can realize each process implemented by the method embodiments of FIGS. 1 to 21, and details thereof are omitted herein to avoid redundancy.

Embodiments of the present disclosure further provide a power system.

As shown in FIG. 2, the power conversion system includes a first control module and at least one power conversion device.

Each of the at least one power conversion device is connected to an alternating-current coupling point. Each of the at least one power conversion device includes a first converter and at least one direct-current module. Each of the at least one power conversion device is configured to be connected to an external device via the alternating-current coupling point. In each of the at least one power conversion device, each of the at least one direct-current module is connected to the first converter via a direct-current coupling point. The first control module is connected to the first converter of the at least one direct-current module.

The power system operates based on the power control method for the power system according to any of the above embodiments.

According to the power system according to the embodiments of the present disclosure, the target alternating-current signal for adjusting the first converter of the power conversion device is determined based on the expected direct-current side power response value corresponding to the target power conversion device and the first electrical signal reference value at the alternating-current coupling point. The target alternating-current signal is then used to control the first converter, so as to adjust the power supply relationship between the at least one power conversion device and enable each power conversion device to reach a balanced state.

In some embodiments, the direct-current module may include a direct-current converter, and a power generation device, a power consumption device, or an energy storage device connected to the direct-current converter.

In some embodiments, the first control module may include a main control module and at least one sub-control module.

In this embodiment, the main control module is electrically connected to each of the at least one sub-control module. The at least one sub-control module is in a one-to-one correspondence with the at least one power conversion device.

In some embodiments, each of the at least one sub-control module may be the first converter in the corresponding power conversion device, or may be a controller in the first converter, etc.

The main control module may be an external control module independent of each of the at least one power conversion device, such as a general scheduling unit shown in FIG. 2, or may be disposed inside any one of the at least one power conversion device, as shown in FIG. 3.

During an actual execution process, an execution logic of the main control module is shown in FIG. 5. The main control module is configured to determine, based on the actual electrical signal, the first electrical signal reference value, the second electrical signal reference value, and the third electrical signal reference value at alternating-current coupling point, the first control signal, a second control signal, and a third control signal, respectively.

An execution logic of the sub-control module is shown in FIGS. 6 and 7. The sub-control module is configured to: convert, based on the first converter parameter corresponding to the target power conversion device, the first control signal into the first alternating-current side scheduling parameter value for adjusting the first converter, the second control signal into a second alternating-current signal for adjusting the first converter, and the third control signal into a third alternating-current signal for adjusting the first converter; and determine, based on the first alternating-current side scheduling parameter value and the expected direct-current side power response value corresponding to the target power conversion device, the target alternating-current signal corresponding to the target power conversion device to control the first converter, and applying an upper threshold and a lower threshold limit to the target alternating-current signal using the second alternating-current signal and the third alternating-current signal.

The specific control logic has been described in the above embodiments, and details thereof are omitted herein.

As shown in FIG. 23, embodiments of the present disclosure also provide an electronic device 2300. The electronic device 2300 includes a processor 2301, a memory 2302, and a computer program that is stored on the memory 2302 and executable on the processor 2301. The program is configured to implement, when executed by the processor 2301, operations of the power control method for the power system according to various embodiments described above, and can achieve the same technical effect. Details thereof are omitted herein to avoid redundancy.

It should be noted that the electronic device in the embodiments of the present disclosure includes the mobile devices and the non-mobile electronic devices that are mentioned above.

Embodiments of the present disclosure also provide a non-transitory computer-readable storage medium. The medium has a computer program stored thereon. The computer program is configured to implement, when executed by a processor, the various processes of the embodiments of the power control method for the power system described above, and can achieve the same technical effect. Details thereof details are omitted herein to avoid redundancy.

The processor is the processor in the electronic device described in the above embodiments. The readable-storage medium includes a computer-readable storage medium, such as a computer read-only memory (ROM), a random access memory (RAM), a magnetic disk, or an optical disk.

Embodiments of the present disclosure also provide a computer program product. The product includes a computer program. The computer program is configured to implement, when executed by a processor, the power control method for the power system described above.

The processor is the processor in the electronic device described in the above embodiments. The readable storage medium includes a computer-readable storage medium, such as a computer read-only memory (ROM), a random access memory (RAM), a magnetic disk, or an optical disk.

Embodiments of the present disclosure also provide a chip. The chip includes a processor and a communication interface. The communication interface is coupled to the processor. The processor is configured to execute a program or instructions to implement the various processes of the embodiments of the power control method for the power system described above, and can achieve the same technical effect. Details thereof are omitted herein to avoid redundancy.

It should be understood that the chip mentioned in the embodiments of the present disclosure can also be referred as a system-level chip, a system chip, a chip system, or a system-on-chip, etc.

It should be noted that, terms herein "comprise", "include" or any other variations thereof are meant to cover non-exclusive including, such that the process, method, article or device including a series of elements do not only include those elements, but also include other elements that are not explicitly listed, or also include inherent elements of the process, method, article or device. In a case that there are no more restrictions, an element qualified by the statement "comprises a ..." does not exclude the presence of additional identical elements in the process, method, article or device that includes the said element. In addition, it should be noted that the scope of the methods and devices in the implementations of the present disclosure are not limited to performing the functions in the order shown or discussed, and may also include performing the functions in a substantially simultaneous manner or in a reverse order according to the involved functions. For example, the described methods may be performed in an order different from the described order, and various steps may be added, omitted, or combined. In addition, features described with reference to some examples may be combined in other examples.

From the above description of the implementations, those skilled in the art may clearly understand that the methods of the above embodiments can be implemented by software and a necessary general hardware platform. Of course, the method can also be implemented by hardware, but the former is a preferred implementation in many cases. Based on such understanding, the technical solutions of the present disclosure essentially, or the part contributing to the related art may be embodied in a form of a software product. The computer software product is stored in a storage medium (such as ROM/RAM, a magnetic disk, and an optical disc), and includes several instructions for allowing a terminal (which may be a mobile phone, a computer, a server, or a network device) to execute methods described in the embodiments of the present disclosure.

The embodiments of the present disclosure have been described above with reference to the accompanying drawings, but the present disclosure is not limited to the above-described specific implementations, which are merely schematic and not restrictive, and those skilled in the art can make many forms under the inspiration of the present disclosure without departing from the purpose of the present disclosure and the scope of the claims, all of which fall within the protection of the present disclosure.

In the description of this specification, descriptions with reference to the terms "an embodiment", "some embodiments", "schematic embodiments", "examples", "specific examples", or "some examples", etc., mean that specific features, structure, materials, or characteristics described in conjunction with the embodiment or example are included in at least one embodiment or example of the present disclosure. In this specification, the schematic representations of the above terms do not necessarily refer to the same embodiment or example. Moreover, the described specific features, structures, materials or characteristics may be combined in any one or more embodiments or examples in a suitable manner.

Although the embodiments of the present disclosure have been shown and described above, it can be understood by those skilled in the art that various changes, modifications, replacements, and variations can be made to these embodiments without departing from the principles and ideas of the present disclosure. The scope of the present disclosure is defined by the claims as attached and their equivalents.

## Claims

1. A power control method for a power system, wherein:
the power system comprises at least one power conversion device and a first control module electrically connected to each of the at least one power conversion device, wherein: each of the at least one power conversion device is connected to an alternating-current coupling point; each of the at least one power conversion device comprises a first converter and at least one direct-current module; each of the at least one power conversion device is configured to be connected to an external device via the alternating-current coupling point; and in each of the at least one power conversion device, each of the least one direct-current module is connected to the first converter via a direct-current coupling point; and
the method comprises:
obtaining, by the first control module, an expected direct-current side power response value corresponding to a target power conversion device among the at least one power conversion device;
determining, based on the expected direct-current side power response value corresponding to the target power conversion device, and an actual electric signal and a first electric signal reference value at the alternating-current coupling point, a target alternating-current electric signal corresponding to the target power conversion device; and
controlling, based on the target alternating-current electric signal, an operating state of the target power conversion device, to adjust a power supply relationship between the at least one power conversion device.

2. The power control method for the power system according to claim 1, wherein said determining, based on the expected direct-current side power response value corresponding to the target power conversion device, and the actual electric signal and the first electric signal reference value at the alternating-current coupling point, the target alternating-current electric signal corresponding to the target power conversion device comprises:
determining, based on the actual electrical signal and the first electrical signal reference value at the alternating-current coupling point, a first alternating-current side scheduling parameter value; and
determining, based on the first alternating-current side scheduling parameter value and the expected direct-current side power response value corresponding to the target power conversion device, the target alternating-current electric signal corresponding to the target power conversion device.

3. The power control method for the power system according to claim 2, wherein said determining, based on the first alternating-current side scheduling parameter value and the expected direct-current side power response value corresponding to the target power conversion device, the target alternating-current electric signal corresponding to the target power conversion device comprises:
when an absolute value of a difference between the first alternating-current side scheduling parameter value and the expected direct-current side power response value is smaller than a first threshold, determining the target alternating-current electric signal as the first alternating-current side scheduling parameter value; when the absolute value of the difference between the first alternating-current side scheduling parameter value and the expected direct-current side power response value is greater than or equal to the first threshold, determining the target alternating-current electric signal as the expected direct-current side power response value; or
determining, based on the first alternating-current side scheduling parameter value and the expected direct-current side power response value, the target alternating-current electric signal; and setting an upper threshold and/or a lower threshold for the target alternating-current electric signal to correct the target alternating-current electric signal.

4. The power control method for the power system according to claim 3, wherein said setting the upper threshold and/or the lower threshold for the target alternating-current electric signal to correct the target alternating-current electric signal comprises:
when the target alternating-current electric signal is greater than a second alternating-current electric signal, updating the target alternating-current electric signal to the second alternating-current electric signal, wherein the second alternating-current electric signal is determined based on the actual electrical signal and a second electrical signal reference value at the alternating-current coupling point, the second electrical signal reference value being greater than the first electrical signal reference value; and/or
when the target alternating-current electric signal is smaller than a third alternating-current electric signal, updating the target alternating-current electric signal to the third alternating-current electric signal, wherein the third alternating-current electric signal is determined based on the actual electrical signal and a third electrical signal reference value at the alternating-current coupling point, the third electrical signal reference value being smaller than the first electrical signal reference value.

5. The power control method for the power system according to claim 2, wherein said determining, based on the actual electrical signal and the first electrical signal reference value at the alternating-current coupling point, the first alternating-current side scheduling parameter value comprises:
determining, based on the actual electrical signal and the first electrical signal reference value at the alternating-current coupling point, a first control signal; and
converting, based on a first converter parameter corresponding to the target power conversion device, the first control signal into the first alternating-current side scheduling parameter value for adjusting the first converter.

6. The power control method for the power system according to claim 5, wherein said determining, based on the actual electrical signal and the first electrical signal reference value at the alternating-current coupling point, the first control signal comprises:
generating, based on a first difference between the actual electrical signal and the first electrical signal reference value, the first control signal.

7. The power control method for the power system according to any one of claims 1 to 6, wherein said controlling, based on the target alternating-current electric signal, the operating state of the target power conversion device comprises:
performing, based on the target alternating-current electric signal and an actual electrical signal of a controlled point corresponding to the alternating-current coupling point, closed-loop control on the target power conversion device.

8. The power control method for the power system according to claim 7, wherein:
when the power system comprises one power conversion device, obtaining the actual electrical signal based on an alternating-current side sampling signal of the power conversion device and/or a gateway sampling signal; and
when the power system comprises a plurality of power conversion devices, obtaining the actual electrical signal based on an alternating-current side sampling signal of at least one of the plurality of power conversion devices, an average of alternating-current side sampling signals of the plurality of power conversion devices, and a gateway sampling signal.

9. The power control method for the power system according to any one of claims 1 to 6, wherein said obtaining the expected direct-current side power response value corresponding to the target power conversion device among the at least one power conversion device comprises:
for each of the at least one direct-current module of the target power conversion device, determining, based on a type of the direct-current module, an expected sub-direct-current side power response value corresponding to the direct-current module; and
determining, based on a sum of the expected sub-direct-current side power response value corresponding to the at least one direct-current module, the expected direct-current side power response value corresponding to the target power conversion device.

10. The power control method for the power system according to claim 9,
wherein said for each of the at least one direct-current module of the target power conversion device, determining, based on the type of the direct-current module, the expected sub-direct-current side power response value corresponding to the direct-current module comprises:
when the direct-current module is a power generation device, determining a maximum generation power corresponding to the power generation device as the expected sub-direct-current side power response value corresponding to the power generation device;
when the direct-current module is a power consumption device, determining a charging request power corresponding to the power consumption device as the expected sub-direct-current side power response value corresponding to the power consumption device; and
when the direct-current module is an energy storage device, determining, based on types of other direct-current modules connected to the energy storage device and a first alternating-current side scheduling parameter value, the expected sub-direct-current side power response value corresponding to the energy storage device, wherein the first alternating-current side scheduling parameter value is determined based on the actual electrical signal and the first electrical signal reference value at the alternating-current coupling point; or
wherein for each of the at least one direct-current module of the target power conversion device, the expected sub-direct-current side power response value corresponding to the direct-current module is determined based on at least one of the type of the direct-current module, a performance parameter of the direct-current module, power scheduling of the direct-current module, and a charging request power corresponding to the direct-current module.

11. The power control method for the power system according to claim 10, wherein said when the direct-current module is the energy storage device, determining, based on the types of other direct-current modules connected to the energy storage device and the first alternating-current side scheduling parameter value, the expected sub-direct-current side power response value corresponding to the energy storage device comprises:
when each of the other direct-current modules connected to the energy storage device is an energy storage device or no other devices connected to the energy storage device exist, determining the expected sub-direct-current side power response value corresponding to the energy storage device based on an absolute value of a maximum charge and discharge power that corresponds to the energy storage device, an absolute value of the first alternating-current side scheduling parameter value, and the charge and discharge state corresponding to the maximum charge and discharge power;
when the other direct-current modules connected to the energy storage device comprise at least one of the power generation device and the power consumption device, determining, based on the first alternating-current side scheduling parameter value and an expected sub-direct-current side power response values corresponding to a target module, an energy storage scheduling power corresponding to the energy storage device, wherein the target module comprises the power generation device and/or the power consumption device connected to the energy storage device; and
determining the expected sub-direct-current side power response value corresponding to the energy storage device based on the energy storage scheduling power corresponding to the energy storage device, a charge and discharge state corresponding to the energy storage scheduling power, and the maximum charge and discharge power corresponding to the energy storage device.

12. The power control method for the power system according to any one of claims 1 to 6, wherein:
the first electrical signal reference value is determined based on a rated voltage of a power grid in an area where the power system is located, and the first electrical signal reference value is configured to enable the external device connected to the power system to operate normally; or
a second electrical signal reference value is determined based on a sampling error of the first converter and/or a maximum electrical signal of the external device connected to the power system under a normal operating condition, the first electrical signal reference value being smaller than the second electrical signal reference value; or
a third electrical signal reference value is determined based on the sampling error of the first converter and/or the minimum electrical signal of the external device connected to the power system under the normal operating condition, the first electrical signal reference value being greater than the third electrical signal reference value; or
wherein the method further comprises: set, based on an operating time period of the power system and/or a type of the external device connected to the power system, at least one of the first electric signal reference value, a second electric signal reference value, and a third electric signal reference value in a corresponding manner, wherein the second electric signal reference value is greater than the first electric signal reference value; and the first electric signal reference value is greater than the third electric signal reference value.

13. A power control apparatus for a power system, wherein:
the power system comprises at least one power conversion device, wherein: each of the at least one power conversion device is connected to an alternating-current coupling point; each of the at least one power conversion device comprises a first converter and at least one direct-current module; each of the at least one power conversion device is configured to be connected to an external device via the alternating-current coupling point; and in each of the at least one power conversion device, each of the at least one direct-current module is connected to the first converter via a direct-current coupling point; and
the apparatus comprises:
a first processing module, configured to obtain an expected direct-current side power response value corresponding to a target power conversion device among the at least one power conversion device;
a second processing module, configured to determine, based on the expected direct-current side power response value corresponding to the target power conversion device, and an actual electric signal and a first electric signal reference value at the alternating-current coupling point, a target alternating-current electric signal corresponding to the target power conversion device; and
a third processing module, configured to control, based on the target alternating-current electric signal, an operating state of the target power conversion device, to adjust a power supply relationship between the at least one power conversion device.

14. A power system, comprising:
a first control module; and
at least one power conversion device, wherein: each of the at least one power conversion device is connected to an alternating-current coupling point; each of the at least one power conversion device comprises a first converter and at least one direct-current module; each of the at least one power conversion device is configured to be connected to an external device via the alternating-current coupling point; in each of the at least one power conversion device, each of the at least one direct-current module is connected to the first converter via a direct-current coupling point; and the first control module is connected to the first converter of the at least one power conversion device;
wherein the power system operates based on the power control method for the power system according to any one of claims 1 to 12.

15. The power system according to claim 14, wherein the direct-current module comprises:
a direct-current converter; and
a power generation device, a power consumption device, or an energy storage device connected to the direct-current converter.
